(19) Europäisches Patentamt
European Patent Office
Office européen des brevets

(11) EP 4 586 631 A1

(12) EUROPEAN PATENT APPLICATION
published in accordance with Art. 153(4) EPC

(43) Date of publication:
16.07.2025 Bulletin 2025/29

(21) Application number: 23888941.4

(22) Date of filing: 12.10.2023

(51) International Patent Classification (IPC):
H04N 23/67 (2023.01)      H04N 23/667 (2023.01)
H04N 23/63 (2023.01)      H04N 23/80 (2023.01)
H04N 5/77 (2006.01)       H04N 23/55 (2023.01)

(52) Cooperative Patent Classification (CPC):
H04N 5/77; H04N 23/55; H04N 23/63;
H04N 23/667; H04N 23/67; H04N 23/80

(86) International application number:
PCT/KR2023/015670

(87) International publication number:
WO 2024/101677 (16.05.2024 Gazette 2024/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 08.11.2022 KR 20220148016

(71) Applicant: Samsung Electronics Co., Ltd.
Suwon-si, Gyeonggi-do 16677 (KR)

(72) Inventors:
• CHAKRABORTY, Trishna
  Dhaka, 1205 (BD)
• HOSSAIN, Md. Imtiaz
  Dhaka, 1205 (BD)
• HOSSAIN, Md. Jobed
  Dhaka, 1205 (BD)
• RAHMAN, Imranur
  Dhaka, 1205 (BD)

(74) Representative: Gulde & Partner
Patent- und Rechtsanwaltskanzlei mbB
Berliner Freiheit 2
10785 Berlin (DE)

(54) ELECTRONIC DEVICE AND CONTROL METHOD THEREFOR

(57)    An electronic device and a control method therefor are provided. The electronic device comprises: a camera including a plurality of lenses; a display; a memory storing at least one instruction; and at least one processor which is connected to the camera, the display, and the memory, and which controls the electronic device. The at least one processor controls the display such that a preview is displayed on the basis of an image acquired by the camera and, if a user command for selecting a first photography mode is input, searches for a symmetric object from among objects included in the image and focuses on the retried symmetric object.

FIG. 3

START

EXECUTE A CAMERA APPLICATION — S310

DISPLAY A PREVIEW BASED ON THE FIRST IMAGE — S320

INPUT A USER INSTRUCTION SELECTING THE FIRST PHOTOGRAPHING MODE — S330

GENERATE A SYMMETRY MAP BY USING A SYMMETRY DETECTION ALGORITHM — S340

SEARCH A SYMMETRIC OBJECT BASED ON THE SYMMETRY MAP — S350

PERFORM FOCUSING FOR THE SYMMETRIC OBJECT — S360

WAS A USER'S INSTRUCTION FOR PHOTOGRAPHING INPUT? — S370

STORE THE PHOTOGRAPHED IMAGE — S380

END

EP 4 586 631 A1

## Description

[TECHNICAL FIELD]

The disclosure relates to an electronic device and a control method therefor, and more particularly, to an electronic device that includes a camera including a plurality of lenses, and provides a plurality of photographing modes, and a control method therefor.

[BACKGROUND ART]

Recently, as camera and software technologies have developed, various photographing modes are being provided to electronic devices. For example, an electronic device provides various photographing modes such as a panorama photographing mode, a selfie photographing mode, etc. When an electronic device enters each photographing mode, the electronic device performs image processing by changing the camera setting to correspond to the photographing mode, or by using software.

Meanwhile, recently, puddlegram images including objects which are buildings or natural environments that are reflected by fluids and are expressed symmetrically (referred to as "symmetric objects" hereinafter) are in fashion. Accordingly, search for a method for effectively photographing a puddlegram image is being requested.

[DISCLOSURE]

[TECHNICAL SOLUTION]

An electronic device according to an embodiment of the disclosure includes a camera including a plurality of lenses, a display, memory storing at least one instruction, and at least one processor that is connected with the camera, the display, and the memory, and controls the electronic device. The at least one processor controls the display to display a preview based on an image obtained by the camera. The at least one processor, based on a user instruction selecting a first photographing mode being input, searches a symmetric object among objects included in the image. The at least one processor performs focusing for the searched symmetric object.

A control method for an electronic device according to an embodiment of the disclosure includes the steps of displaying a preview based on an image obtained by a camera of the electronic device, and based on a user instruction selecting a first photographing mode being input, searching a symmetric object among objects included in the image, and performing focusing for the searched symmetric object.

In a non-transitory computer-readable medium including a program for executing a control method of an electronic device according to an embodiment of the disclosure, the control method includes the steps of displaying a preview based on an image obtained by a camera of the electronic device, and based on a user instruction selecting a first photographing mode being input, searching a symmetric object among objects included in the image, and performing focusing for the searched symmetric object.

[DESCRIPTION OF DRAWINGS]

FIG. 1 is a diagram for illustrating an image including a symmetric object according to an embodiment of the disclosure;
FIG. 2 is a block diagram illustrating a configuration of an electronic device according to an embodiment of the disclosure;
FIG. 3 is a flow chart for illustrating a method of performing focusing on a symmetric object while operating in a puddlegram photographing mode according to an embodiment of the disclosure;
FIG. 4 are diagrams for illustrating a symmetry map according to an embodiment of the disclosure;
FIG. 5 is a diagram wherein a highlight is displayed on a symmetric object according to an embodiment of the disclosure;
FIG. 6 is a flow chart for illustrating a method of providing a guide UI that guides such that a symmetric axis is located in a first area while operating in a puddlegram photographing mode according to an embodiment of the disclosure;
FIG. 7A to FIG. 7C are diagrams for illustrating a method of providing a guide UI while operating in a puddlegram photographing mode according to an embodiment of the disclosure;
FIG. 8 is a flow chart for illustrating a method of providing a guide UI that guides such that a symmetric axis is located in a first area corresponding to a preference model while operating in a puddlegram photographing mode according to an embodiment of the disclosure;
FIG. 9A and FIG. 9B are flow charts for illustrating a method of performing a puddlegram photographing mode by using a plurality of lenses according to an embodiment of the disclosure;
FIG. 10A to FIG. 10D are diagrams for illustrating a method of performing a puddlegram photographing mode by using a plurality of lenses according to an embodiment of the disclosure;
FIG. 11A to FIG. 11C are diagrams for illustrating form factors of an electronic device according to various embodiments of the disclosure;
FIG. 12A to FIG. 12C are diagrams for illustrating a method of performing a puddlegram photographing mode according to form factors of an electronic device according to various embodiments of the disclosure;

FIG. 13 is a flow chart for illustrating a method of providing a guide UI that guides folding or unfolding of an electronic device such that a symmetric axis is located in a first area while operating in a puddlegram photographing mode according to an embodiment of the disclosure;

FIG. 14A to FIG. 14C are diagrams illustrating a guide UI that guides folding or unfolding of an electronic device such that a symmetric axis is located in a first area while operating in a puddlegram photographing mode according to an embodiment of the disclosure;

FIG. 15 is a flow chart for illustrating a method of providing a guide UI that guides a movement of an electronic device to detect a symmetric object while operating in a puddlegram photographing mode according to an embodiment of the disclosure;

FIG. 16 is a flow chart for illustrating a method of providing an image filter effect on a reflective surface while operating in a puddlegram photographing mode according to an embodiment of the disclosure;

FIG. 17A to FIG. 17C are diagrams for illustrating an image filter effect provided on a reflective surface according to form factors of an electronic device according to various embodiments of the disclosure;

FIG. 18A to FIG. 18C are diagrams for illustrating a method of performing post-processing on a boundary surface of an electronic device according to an embodiment of the disclosure; and

FIG. 19 is a flow chart for illustrating a method of entering a puddlegram photographing mode automatically according to a folding angle of an electronic device according to an embodiment of the disclosure.

[MODE FOR INVENTION]

Various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include various modifications, equivalents, and/or alternatives of the embodiments of the disclosure. Also, with respect to the detailed description of the drawings, similar components may be designated by similar reference numerals.

Also, in describing the disclosure, in case it is determined that detailed explanation of related known functions or features may unnecessarily confuse the gist of the disclosure, the detailed explanation will be omitted.

In addition, the embodiments described below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Also, the terms used in the disclosure are used only to explain specific embodiments, and are not intended to limit the scope of the disclosure. Further, singular expressions include plural expressions, unless defined obviously differently in the context.

In addition, in the disclosure, expressions such as "have," "may have," "include," and "may include" denote the existence of such characteristics (e.g.: elements such as numbers, functions, operations, and components), and do not exclude the existence of additional characteristics.

Also, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

In addition, the expressions "first," "second," and the like used in the disclosure may describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

In contrast, the description that one element (e.g.: a first element) is "directly coupled" or "directly connected" to another element (e.g.: a second element) can be interpreted to mean that still another element (e.g.: a third element) does not exist between the one element and the another element.

Also, the expression "configured to" used in the disclosure may be interchangeably used with other expressions such as "suitable for," "having the capacity to," "designed to," "adapted to," "made to," and "capable of," depending on cases. Meanwhile, the term "configured to" may not necessarily mean that a device is "specifically designed to" in terms of hardware.

Instead, under some circumstances, the expression "a device configured to" may mean that the device "is capable of" performing an operation together with another device or component. For example, the phrase "a processor configured to perform A, B, and C" may mean a dedicated processor (e.g.: an embedded processor) for performing the corresponding operations, or a generic-purpose processor (e.g.: a CPU or an application processor) that can perform the corresponding operations by executing one or more software programs stored in a memory device.

Further, in the embodiments of the disclosure, 'a module' or 'a unit' may perform at least one function or operation, and may be implemented as hardware or software, or as a combination of hardware and software. Also, a plurality of 'modules' or 'units' may be integrated into at least one module and implemented as at least one processor, excluding 'a module' or 'a unit' that needs to be implemented as specific hardware.

Meanwhile, various elements and areas in the drawings were illustrated schematically. Accordingly, the technical idea of the disclosure is not limited by the relative sizes or intervals illustrated in the accompanying drawings.

Hereinafter, embodiments according to the disclosure will be described in detail with reference to the accompanying drawings, such that those having ordinary skill in the art to which the disclosure belongs can easily carry out the embodiments.

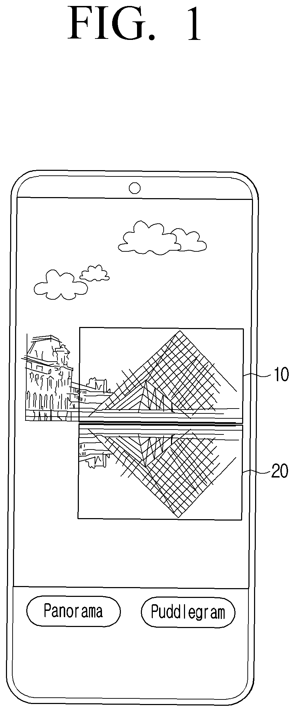

Before explaining the disclosure, "a puddlegram image" according to an embodiment of the disclosure may be an image including a symmetric object. Here, the symmetric object may be an object that includes an object and a reflective object which is an object reflected by a reflective surface. For example, as illustrated in FIG. 1, a puddlegram image may be an image including a building 10 in a pyramid shape, and a reflective object 20 which is the building 10 reflected by fluid (e.g., water).

A puddlegram photographing mode according to an embodiment of the disclosure is one of a plurality of photographing modes, and it may be a mode for photographing a puddlegram image. The electronic device 100 may search a symmetric object from an image photographed by a camera while operating in the puddlegram photographing mode, and perform focusing for the searched symmetric object. Also, the electronic device 100 may provide a guide UI for guiding the location of the symmetric object while operating in the puddlegram photographing mode.

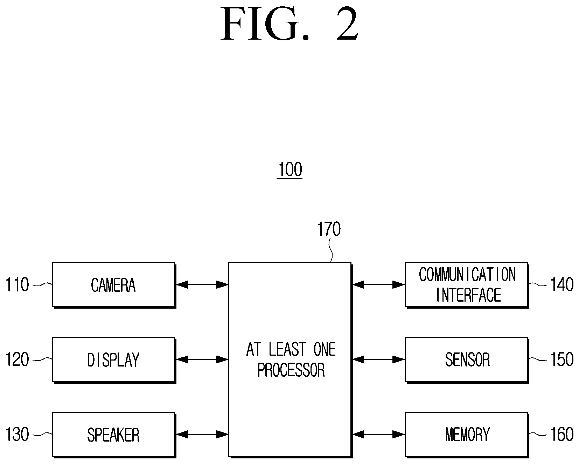

Hereinafter, the disclosure will be described in more detail with reference to the drawings. FIG. 2 is a block diagram illustrating an element of an electronic device according to an embodiment of the disclosure. As illustrated in FIG. 2, the electronic device 100 may include a camera 110, a display 120, a speaker 130, a communication interface 140, a sensor 150, memory 160, and at least one processor 170. Here, the electronic device 100 may be implemented as a smartphone, but this is merely an example, and the electronic device 100 can obviously be implemented as another portable terminal device that can photograph images (e.g., a tablet PC, a smart watch, etc.). Also, the components illustrated in FIG. 1 are merely an example, and it is obvious that some components can be added or deleted according to the type of the electronic device 100.

The camera 110 is a component for obtaining image data that photographed the surroundings of the electronic device 100. In particular, the electronic device 100 may include at least one camera on a plurality of surfaces of the electronic device 100. For example, the electronic device 100 may include a first camera on the front surface of the electronic device 100 (the surface on which the display 120 is arranged), and may include a second camera on the rear surface of the electronic device 100 (the opposite surface of the front surface).

Also, the camera 110 may include a plurality of lenses. The plurality of lenses may include a wide-angle lens (or referred to as a main lens), a telephoto lens, and an ultra wide-angle lens, etc. Alternatively, each lens may be implemented as a separate camera, and the electronic device 100 can obviously include a wide-angle camera, a telephoto camera, and an ultra wide-angle camera.

In particular, the camera 110 may perform auto focusing, and it may particularly perform focusing for a symmetric image while operating in the puddlegram photographing mode.

The display 120 is a component that displays image data, and it may be implemented as a display including self-luminescence elements, or a display including non-self-luminescence elements and a backlight. For example, the display 120 may be implemented as various forms of displays such as a liquid crystal display (LCD), an organic light emitting diodes (OLED) display, light emitting diodes (LED), micro LED, mini LED, a plasma display panel (PDP), a quantum dot (QD) display, quantum dot light emitting diodes (QLED), etc. Inside the display 120, driving circuits that may be implemented in forms such as an a-si TFT, a low temperature poly silicon (LTPS) TFT, an organic TFT (OTFT), etc., and a backlight unit, etc. may also be included.

Also, the display 120 may display a preview obtained based on an image photographed through the camera 110. In addition, while operating in the puddlegram photographing mode, the display 120 may display a highlight for identifying a symmetric object on the preview, a symmetric axis of the symmetric object, a guide UI for guiding the location of the symmetric object, etc.

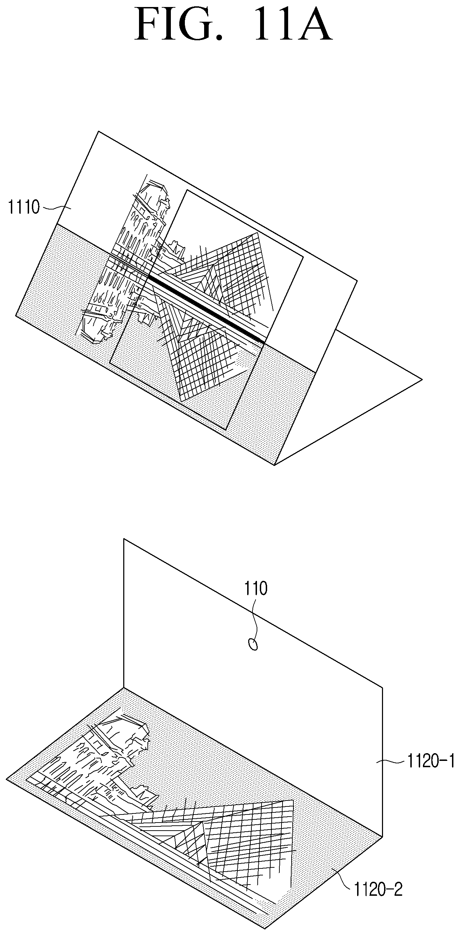

Meanwhile, the display 120 may be implemented as a flexible display. Detailed explanation in this regard will be described later with reference to FIG. 11A to FIG. 11C.

The speaker 130 may output various voice messages and audio data. Meanwhile, the speaker 130 may be provided inside the electronic device 100, but this is merely an example, and the speaker 130 may be provided outside the electronic device 100 and may be electrically connected with the electronic device 100. In particular, the speaker 130 may output a voice guide for guiding the location of the symmetric object while operating in the puddlegram photographing mode.

The communication interface 140 may include at least one circuit, and perform communication with various types of external devices. The communication interface 140 may include at least one of a Bluetooth Low Energy (BLE) module, a Wi-Fi communication module, a cellular communication module, a third generation (3G) mobile communication module, a fourth generation (4G) mobile communication module, a fourth generation long term evolution (LTE) communication module, or a fifth generation (5G) mobile communication module.

The communication interface 140 may download a camera application that provides a puddlegram photographing mode from an external server.

The sensor 150 may obtain information on the state of the electronic device 100 or the ambient environment of the electronic device 100. In particular, the sensor 150 may include at least one sensor for detecting the movement and the posture of the electronic device 100 (e.g., an acceleration sensor, a gyro sensor, a geomagnetic sensor, etc.), and include at least one sensor for detecting the outside environment (an illumination sensor, a distance sensor, etc.). Other than the above, the sensor 150 may include a sensor for detecting the state of the user (e.g., a heartrate sensor, an electrocardiogram sensor, a blood pressure sensor, etc.).

The memory 160 may store an operating system (OS) for controlling the overall operations of the components of the electronic device 100 and instructions or data related to the components of the electronic device 100. In particular, the memory 160 may store data related to the puddlegram photographing mode, and store an image photographed during the puddlegram photographing mode.

Meanwhile, the memory 160 may be implemented as non-volatile memory (ex: a hard disk, a solid state drive (SSD), flash memory), volatile memory (may include memory inside the at least one processor 170, etc.

The at least one processor 170 may be electrically connected with the memory 160, and control the overall functions and operations of the electronic device 100. In particular, the at least one processor 170 controls the display 120 to display a preview based on an image obtained by the camera 110 by executing the at least one instruction stored in the memory 160. If a user instruction selecting the first photographing mode (or the puddlegram photographing mode) is input, the at least one processor 170 searches a symmetric object among objects included in an image. Then, the at least one processor 170 performs focusing for the searched symmetric object.

In particular, the at least one processor 170 may obtain a symmetry map by using a symmetry detection algorithm. Then, the at least one processor 170 may search a symmetric object among objects included in an image by using the symmetry map. Then, the at least one processor 170 may control the display 120 to display a highlight corresponding to the searched symmetric object on the preview.

Also, the at least one processor 170 may identify the symmetric axis of the symmetric object by using the symmetry map. The at least one processor 170 may control the display 120 to display the identified symmetric axis on the preview. The at least one processor 170 may determine whether the location of the symmetric axis is located in the first area in the preview. If it is determined that the location of the symmetric axis is beyond the first area in the preview, the at least one processor 170 may control the display 110 to display a first guide UI guiding a movement of the electronic device such that the symmetric axis is located in the first area on the preview. Here, the first area may be determined according to a photographing direction of a symmetric object included in puddlegram images photographed by the user, the location of the symmetric object in the preview, and a ratio of the symmetric object included in the puddlegram images.

In addition, the at least one processor 170 may control the display 120 to display a first preview based on a first image photographed by using a first lens among the plurality of lenses. If a user instruction selecting the first photographing mode is input while displaying the first preview, the at least one processor 170 may obtain a second image in the background by using a second lens different from the first lens among the plurality of lenses. If the symmetric object is not searched in the first image, but the symmetric object is searched in the second image, the at least one processor 170 may control the display 120 to convert the first preview into a second preview obtained based on the second image. The at least one processor 170 may identify the symmetric axis of the symmetric object included in the second image. The at least one processor 170 may control the display 120 to display the identified symmetric axis on the second preview.

Meanwhile, the electronic device 100 may further include a hinge part that makes the electronic device 100 folded or unfolded, and here, the display may be implemented as a flexible display that is folded or unfolded as the electronic device 100 is folded or unfolded centered around the hinge part. Here, if a user instruction selecting the first photographing mode is input while the electronic device 100 is folded by a first angle by the hinge part, the at least one processor 170 may identify a symmetric axis of a symmetric object generated by a reflective surface among a plurality of surfaces included in the electronic device 100 among the objects included in the image, and control the display 120 to display the symmetric axis on the preview. The at least one processor 170 may determine whether the location of the symmetric axis is located in the first area in the preview. If it is determined that the location of the symmetric axis is beyond the first area in the preview, the at least one processor 170 may control the display 120 to display a second guide UI guiding to adjust a folding angle of the electronic device so as to locate the symmetric axis in the first area on the preview.

If a user instruction selecting the first photographing mode is input while the electronic device 100 is folded by the first angle by the hinge part, the at least one processor 170 may determine whether a symmetric object is searched among objects included in an image photographed by the ultra wide-angle lens among the plurality of lenses. If a symmetric object is not searched, the at least one processor 170 may control the display 120 to display a third guide UI guiding such that the electronic device 100 is moved to be closer to an object on the preview.

Also, the at least one processor 170 may control the display 120 to display an image filter effect in at least some parts of the display which is a reflective surface.

Then, the at least one processor 170 may determine a recommended image filter effect for recommending to the user based on information on the ambient brightness detected by the sensor 140, information on colors included in the image, and information on the objects included in the image. When the recommended image filter effect is selected, the at least one processor 170 may control the display 120 to display the recommended image filter effect in at least some parts of the display which is a reflective surface.

Also, if a camera application is executed while the electronic device 100 is folded by the first angle by the hinge part, the at least one processor 170 may enter the photographing mode automatically as the first photographing mode, and operate in the first photographing mode.

Hereinafter, various embodiments of the disclosure will be described with reference to the drawings.

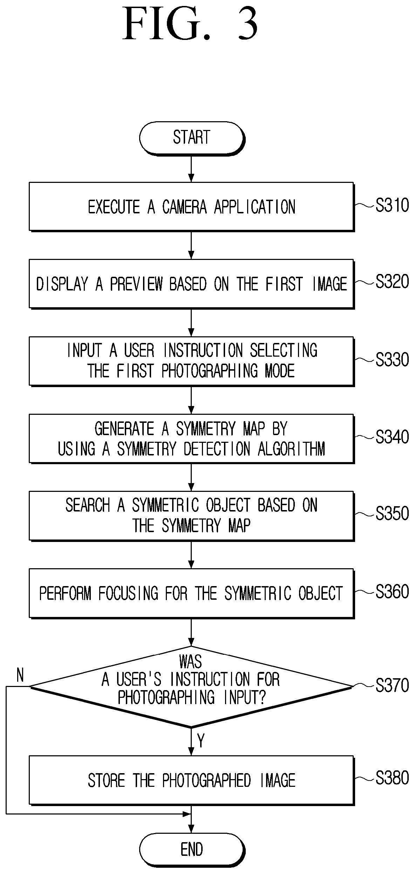

The electronic device 100 may search a symmetric object while operating in the puddlegram photographing mode, and display a highlight for the searched object and perform focusing. FIG. 3 is a flow chart for illustrating a method of performing focusing on a symmetric object while operating in a puddlegram photographing mode according to an embodiment of the disclosure.

First, the electronic device 100 may execute a camera application in the step S310. Specifically, if a user input for executing the camera application (e.g., a user input selecting the icon of the camera application) is received, the electronic device 100 may execute the camera application, and display an execution screen of the camera application.

The electronic device 100 may display a preview based on the first image in the step S320. Here, the electronic device 100 may display the preview based on the first image photographed through the wide-angle lens in the camera 110. Here, the electronic device 100 may display the preview by performing imaging processing for the first image, but this is merely an example, and the electronic device 100 may display the first image itself as the preview.

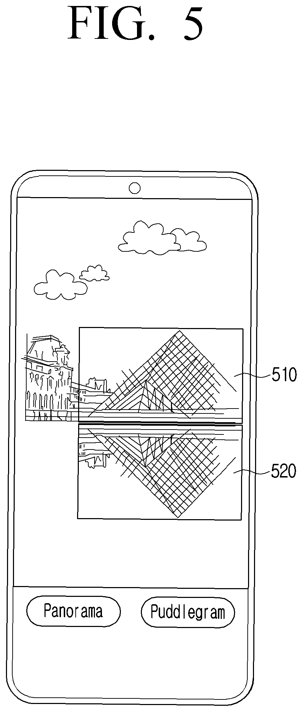

The electronic device 100 may receive input of a user instruction selecting the first photographing mode in the step S330. Specifically, the electronic device 100 may receive input of a user instruction selecting an icon (e.g., the "puddlegram icon" illustrated in FIG. 5) corresponding to the first photographing mode (i.e., the puddlegram photographing mode) among the icons displayed on the preview. When the user instruction selecting the first photographing mode is input, the electronic device 100 may operate in the first photographing mode.

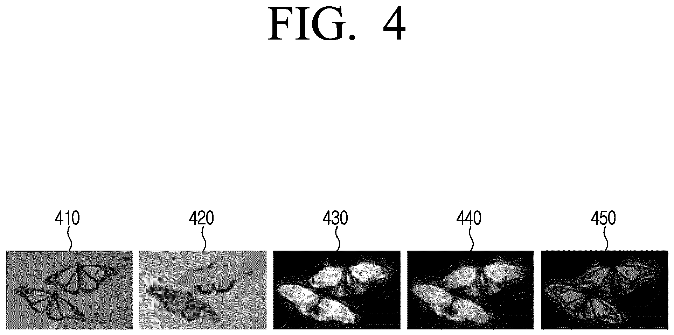

The electronic device 100 may generate a symmetry map by using the symmetry detection algorithm in the step S340. Specifically, the electronic device 100 may calculate mirror reflection of each pixel for an input image, and calculate a confidence score about how much the mirror reflection among pixels is through a scale invariant feature transform (SIFT) algorithm. That is, the electronic device 100 may obtain a first symmetry map indicating mirror reflection of each pixel (a nearest mirror reflection field (NMRF)), and obtain a second symmetry map (a symmetry score map (SSM)) indicating a confidence score that measured similarity between a pixel and a pixel which went through mirror reflection. Then, the electronic device 100 may obtain a final symmetry map by using the first symmetry map and the second symmetry map. For example, if an image 410 as in the first drawing in FIG. 4 is obtained, the electronic device 100 may obtain a map 420 indicating a mirror reflection point pair as in the second drawing in FIG. 4. Here, the two different colors included in the map 420 may indicate different clusters. Then, as in the third drawing in FIG. 4, the electronic device 100 may obtain the second symmetry map (the SSM(S)) by a grayscale image, and as in the fourth drawing in FIG. 4, the electronic device 100 may obtain the first symmetry map (the NMRF(f)) by an HSV color image. Then, the electronic device 100 may obtain a final symmetry map (Im) indicating the degree of mirror reflection of each pixel based on the first symmetry map (the NMRF(f)) and the second symmetry map (the SSM(S)). That is, the electronic device 100 may obtain the final symmetry map (Im) through a formula as follows.

[Formula 1]

$$Im(Q) = S(Q)f(Q), \forall Q \in W \times H$$

Here, Im indicates the final symmetry map, f(Q) indicates the first symmetry map, S(Q) indicates the second symmetry map, and W X H indicate the pixels of an input image.

Meanwhile, generating a symmetry map as described above is merely an example, and a symmetry map can obviously be generated by different methods.

The electronic device 100 may search a symmetric object based on the symmetry map in the step S350. Specifically, the electronic device 100 may identify a symmetric axis from the symmetry map, and search a symmetric object based on the identified symmetric axis. Here, as illustrated in FIG. 1, the symmetric object may be a reflective symmetric object including the object 10 and a reflective object 20 which is the object reflected by the reflective surface.

Here, when a symmetric object is searched, the electronic device 100 may display highlights 510, 520 for the searched symmetric object as illustrated in FIG. 5. In particular, as illustrated in FIG. 5, the electronic device 100 may display highlights for each of the object 510 and the reflective object 520, but this is merely an example, and the electronic device 100 can obviously display one highlight for a symmetric object including an object and a reflective object.

The electronic device 100 may perform focusing for the searched symmetric object in the step S360. Here, when a plurality of symmetric objects are searched, the electronic device 100 can obviously perform focusing for each of the plurality of objects.

The electronic device 100 may determine whether a user's instruction for photographing was input in the step S370. Here, the user's instruction for photographing may be an instruction selecting a predetermined icon included in the display 120, but this is merely an example, and it may be an instruction selecting a separate physical photographing button, etc.

If a user's instruction for photographing is input in the step S370-Y, the electronic device 100 may store the photographed image in the step S380.

Meanwhile, in the aforementioned embodiment, it was explained that the user enters the first photographing mode by directly selecting the first photographing mode, but this is merely an example, and if a symmetric object is searched in the first image by performing the steps S340 and S350 first, the electronic device 100 may enter the first photographing mode. Alternatively, if a symmetric object is searched in the first image by performing the steps S340 and S350 first, the electronic device 100 may display an icon for entering the first photographing mode. When the displayed icon is selected, the electronic device 100 may enter the first photographing mode.

Meanwhile, for photographing an optimal puddlegram image while operating in the first photographing mode, the electronic device 100 may display a guide UI guiding a movement of the electronic device 100 such that the symmetric axis is moved to a predetermined area.

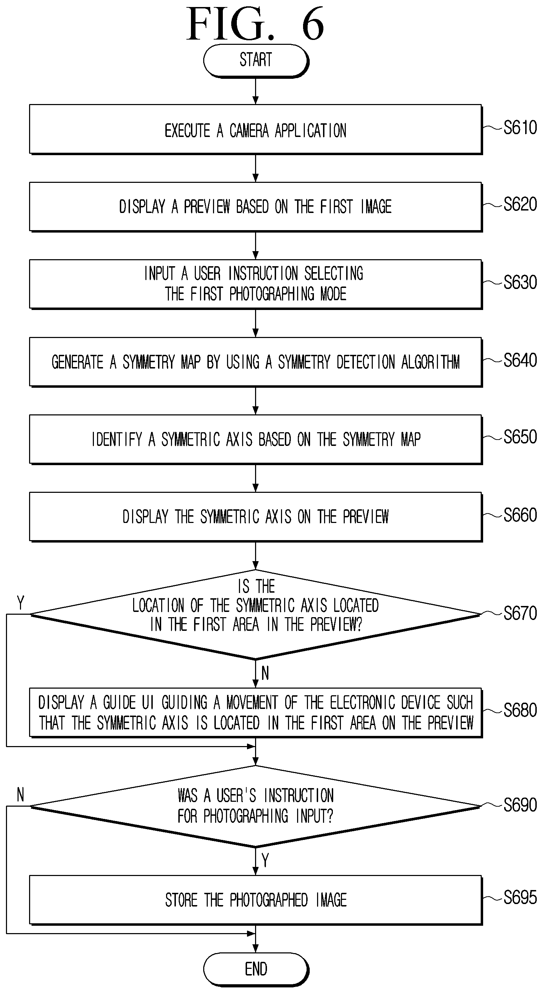

FIG. 6 is a flow chart for illustrating a method of providing a guide UI that guides such that a symmetric axis is located in a first area while operating in a puddlegram photographing mode according to an embodiment of the disclosure. Meanwhile, as the steps S610 to S640 are identical to the steps S310 to S340 explained in FIG. 3, overlapping explanation will be omitted.

The electronic device 100 may identify a symmetric axis based on the symmetry map in the step S650. For example, as illustrated in the second image in FIG. 4, the electronic device 100 may identify at least one symmetric axis from the symmetry map.

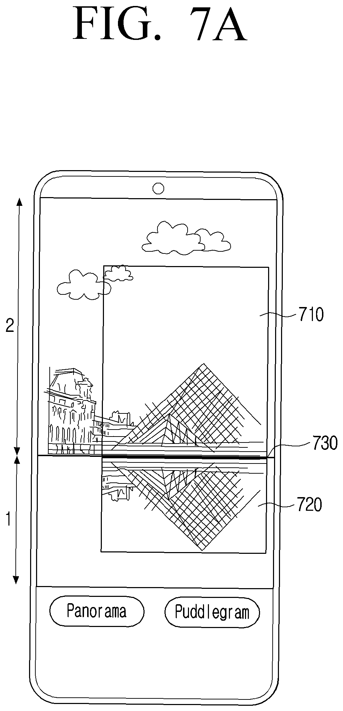

Then, the electronic device 100 may display the symmetric axis on the preview in the step S660. Here, as explained in FIG. 3, the electronic device 100 may display a highlight for the symmetric object, and display the symmetric axis together. For example, as illustrated in FIG. 7A, the electronic device 100 may display the symmetric axis 730 together with the highlights 710, 720 for the symmetric object.

Here, the electronic device 100 may determine whether the location of the symmetric axis is located in the first area in the preview in the step S670. Here, the first area is a predetermined area for photographing an optimal puddlegram image, and for example, it may be the central area of the preview. Here, the central area may be an area that divides the preview in 1:1.

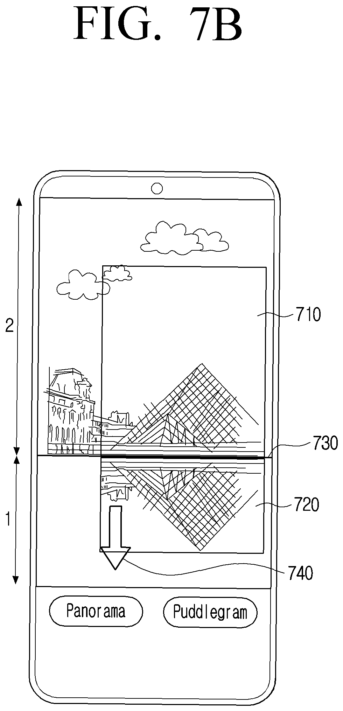

If it is determined that the location of the symmetric axis is beyond the first area in the preview in the step S670-N, the electronic device 100 may display a guide UI guiding a movement of the electronic device 100 such that the symmetric axis is located in the first area on the preview in the step S680. For example, as illustrated in FIG. 7A, if the location of the symmetric axis is located in an area that divides the preview in 2:1, the electronic device 100 may determine that the location of the symmetric axis is not located in the first area. Then, as illustrated in FIG. 7B, the electronic device 100 may display a guide UI 740 guiding the electronic device 100 to move downward such that the location of the symmetric axis can be located in the first area. Here, as illustrated in FIG. 7B, the electronic device 100 may display the guide UI 740 in the form of an arrow guiding directions, but this is merely an example, and a text message or a voice message guiding the movement of the electronic device 100 can obviously be provided together.

In addition, while it was explained in FIG. 7B that a guide UI in the form of an arrow that moves the electronic device 100 (or the camera 110) in up and down directions is provided, this is merely an example, and a guide UI that guides zoom-in/zoom-out or guides the camera to rotate (in particular, rotation in a pitch direction) can obviously be provided.

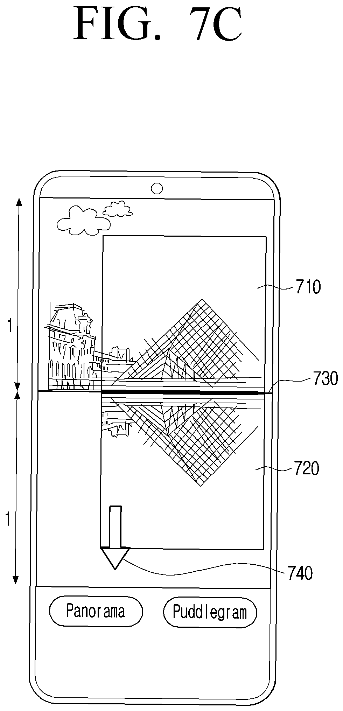

If the user moves the electronic device 100 in a downward direction through the guide UI 740 as illustrated in FIG. 7B, the electronic device 100 may display a preview wherein the symmetric axis is located in the first area as illustrated in FIG. 7C. Here, if the symmetric axis is located in the first area, the electronic device 100 may provide an image effect guiding that the symmetric axis is located in the first area (e.g., an image effect that at least one of the highlights 710, 720 or the symmetric axis 730 is changed to a different color or flickers, etc.) or a guide message.

The electronic device 100 may determine whether a user's instruction for photographing was input in the step S690. Here, the user's instruction for photographing may be an instruction selecting a predetermined icon included in the display 120, but this is merely an example, and it may be an instruction selecting a separate physical photographing button, etc.

If a user's instruction for photographing is input in the step S690-Y, the electronic device 100 may store the photographed image in the step S695.

Meanwhile, in the aforementioned embodiment, it was explained that the first area is a predetermined area (e.g., the central area), but this is merely an example, and the first area may be identified by a preference model preferred by the user. Here, the preference model may be determined according to a photographing direction of a symmetric object included in puddlegram images photographed by the user, the location of the symmetric object in the preview, and a ratio of the symmetric object included in the puddlegram images.

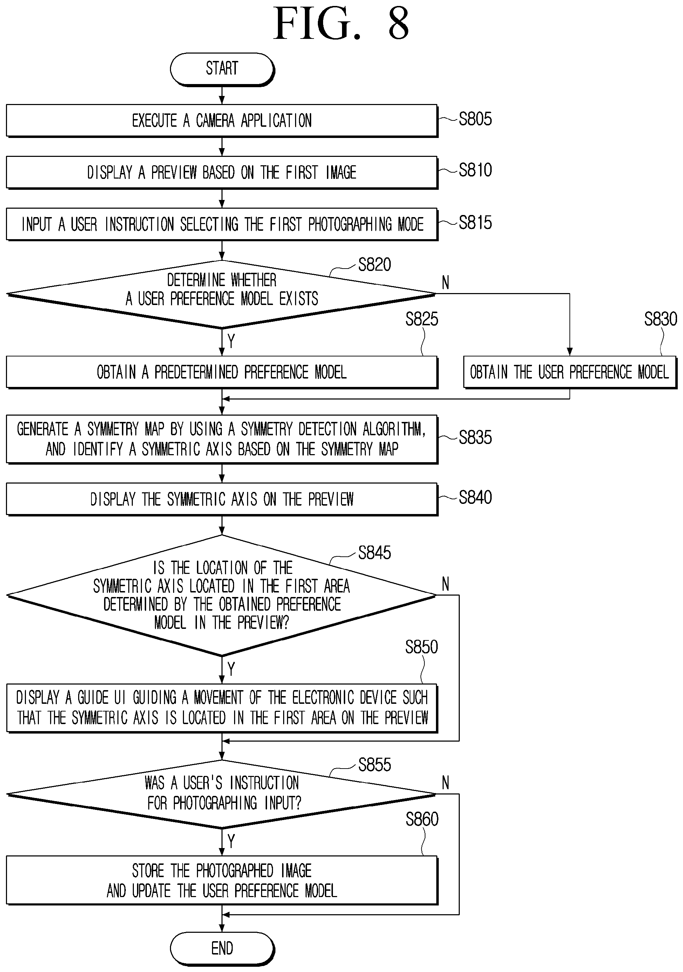

FIG. 8 is a flow chart for illustrating a method of providing a guide UI that guides such that a symmetric axis is located in a first area corresponding to a preference model while operating in a puddlegram photographing mode according to an embodiment of the disclosure. Meanwhile, as the steps S805 to S815 are identical to the steps S310 to S330 explained in FIG. 3, overlapping explanation will be omitted.

The electronic device 100 may determine whether a user preference model exists in the step S820. Here, the user preference model is a model obtained by analyzing puddlegram images that were previously photographed by the user, and the user preference model may determine the first area guiding an optimal location of a symmetric axis in the preview according to the photographing direction of a symmetric object included in the puddlegram images that were previously photographed, the location of the symmetric object in the preview, and a ratio of the symmetric object included in the puddlegram images.

If the user preference model does not exist in the step S820-N, the electronic device 100 may obtain a predetermined preference model in the step S825. Here, the predetermined preference model may be a preference model that determines a predetermined area (e.g., the centra area of the preview) as the first area.

If the user preference model exists in the step S820-Y, the electronic device 100 may obtain a user preference model in the step S830.

The electronic device 100 may generate a symmetry map by using the symmetry detection algorithm, and identify a symmetric axis based on the symmetry map in the step S835.

The electronic device 100 may display the identified symmetric axis on the preview in the step S840. Here, the electronic device 100 may display a highlight for the symmetric object as explained in FIG. 3, and may display the symmetric axis together.

The electronic device 100 may determine whether the location of the symmetric axis is located in the first area determined by the obtained preference model in the preview in the step S845. Here, the first area is an area determined by the obtained preference model, and in case a predetermined preference model was obtained, the first area may be the central area on the preview (e.g., an area dividing the preview in 1: 1), and in case the user preference model was obtained, the first area may be an area dividing the preview in a specific ratio (e.g., an area dividing the preview in 1:2).

In case it is determined that the location of the symmetric axis is beyond the first area in the preview in the step S845-N, the electronic device 100 may display a guide UI guiding a movement of the electronic device 100 such that the symmetric axis is located in the first area on the preview in the step S850.

Then, the electronic device 100 may analyze whether the symmetric axis is located in the first area according to the movement of the electronic device 100. If the symmetric axis is located in the first area, the electronic device 100 may provide an image effect or a guide message guiding that the symmetric axis is located in the first area.

The electronic device 100 may determine whether a user's instruction for photographing was input in the step S855. Here, the user's instruction for photographing may be an instruction selecting a predetermined icon included in the display 120, but this is merely an example, and it may be an instruction selecting a separate physical photographing button, etc.

If a user's instruction for photographing is input in the step S855-Y, the electronic device 100 may store the photographed image, and update the user preference model in the step S860. That is, the electronic device 100 may analyze puddlegram images on the time point when the user's instruction for photographing was input, and obtain information on a photographing direction of a symmetric object, the location of the symmetric object in the preview, and a ratio of the symmetric object included in the puddlegram images. The electronic device 100 may update or generate a user preference model based on the obtained information.

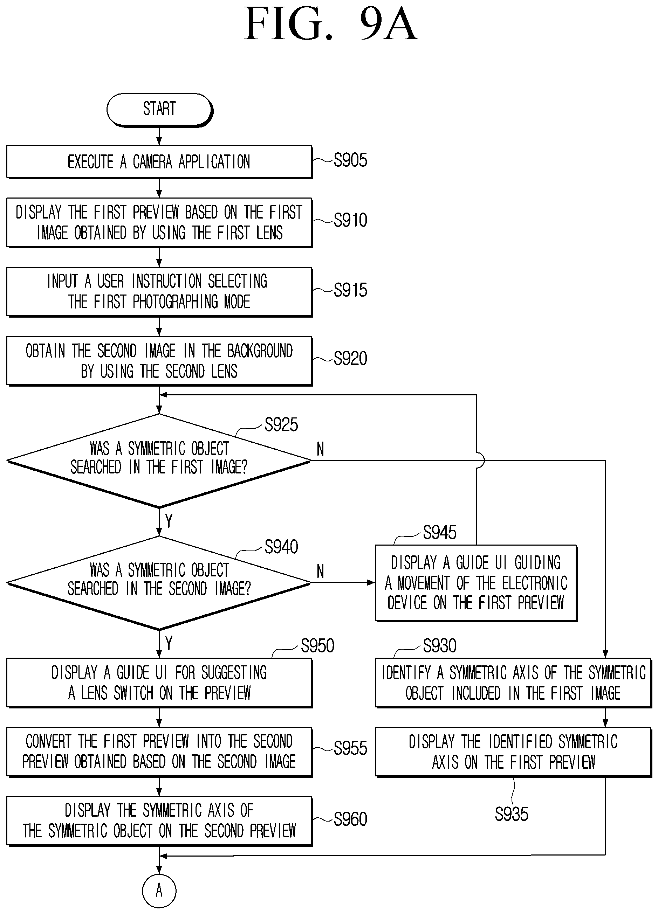

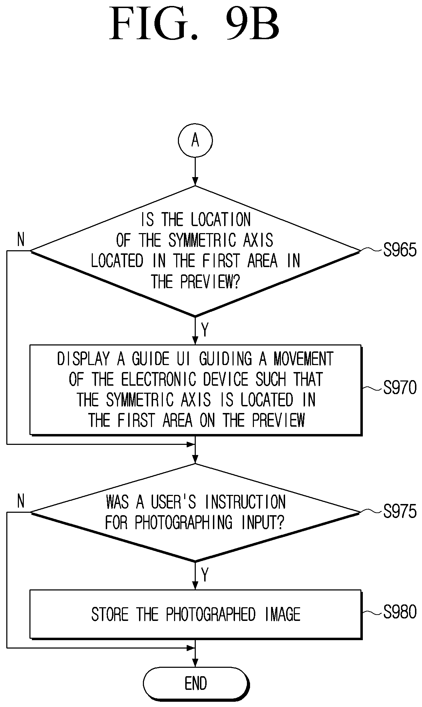

Meanwhile, the electronic device 100 may obtain puddlegram images during the puddlegram photographing mode by using the camera 110 including a plurality of lenses. Detailed explanation in this regard will be described with reference to FIG. 9A to FIG. 10D. FIG. 9A and FIG. 9B are flow charts for illustrating a method of performing a puddlegram photographing mode by using a plurality of lenses according to an embodiment of the disclosure.

First, the electronic device 100 may execute a camera application in the step S310. Specifically, if a user input for executing the camera application (e.g., a user input selecting the icon of the camera application) is received, the electronic device 100 may execute the camera application, and display an execution screen of the camera application.

First, the electronic device 100 may execute a camera application in the step S905. Specifically, if a user input for executing the camera application (e.g., a user input selecting the icon of the camera application) is received, the electronic device 100 may execute the camera application, and display an execution screen of the camera application.

The electronic device 100 may display a first preview based on a first image photographed through a first lens (e.g., a main lens or a wide-angle lens) in the camera 110 in the step S910. Here, the electronic device 100 may display a preview by performing image processing for the first image, but this is merely an example, and the electronic device 100 may display the first image itself as a preview.

The electronic device 100 may receive input of a user instruction selecting the first photographing mode in the step S915. Specifically, the electronic device 100 may receive input of a user instruction selecting an icon corresponding to the first photographing mode (i.e., the puddlegram photographing mode) among the icons displayed on the preview. When the user instruction selecting the first photographing mode is input, the electronic device 100 may enter the first photographing mode.

The electronic device 100 may obtain a second image in the background by using a second lens in the step S920. That is, while the first preview is being displayed, the electronic device 100 may obtain a second image in the background through a second lens (e.g., an ultra wide-angle lens) different from the first lens.

The electronic device 100 may determine whether a symmetric object is searched in the first image in the step S925. That is, the electronic device 100 may determine whether a symmetric object is searched in the first image through a symmetry map for the first image.

If a symmetric object is searched in the first image in the step S925-Y, the electronic device 100 may identify a symmetric axis of the symmetric object included in the first image in the step S930. Then, the electronic device 100 may display the identified symmetric axis on the first preview in the step S935. Here, as illustrated in FIG. 7A, the electronic device 100 may display a highlight for the symmetric object together with the symmetric axis.

If a symmetric object is not searched in the first image in the step S925-N, the electronic device 100 may determine whether a symmetric object is searched from the second image obtained in the background in the step S940.

If a symmetric object is not searched in the second image in the step S940-N, the electronic device 100 may display a guide UI guiding a movement of the electronic device 100 on the first preview in the step S945. That is, the electronic device 100 may guide the user such that a symmetric object exists in the first image or the second image through the movement of the electronic device 100.

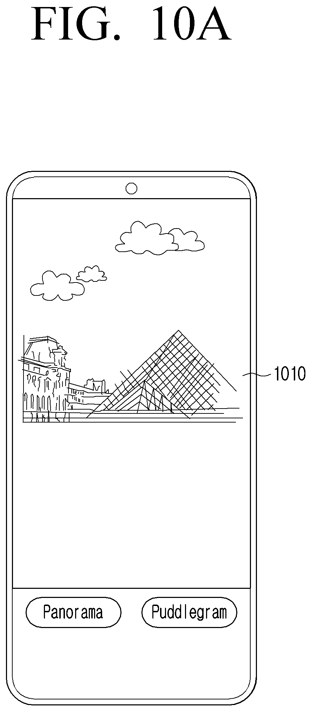

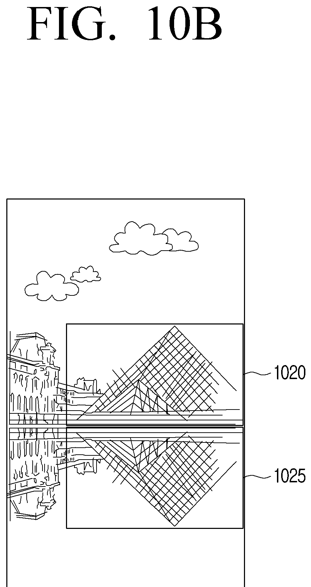

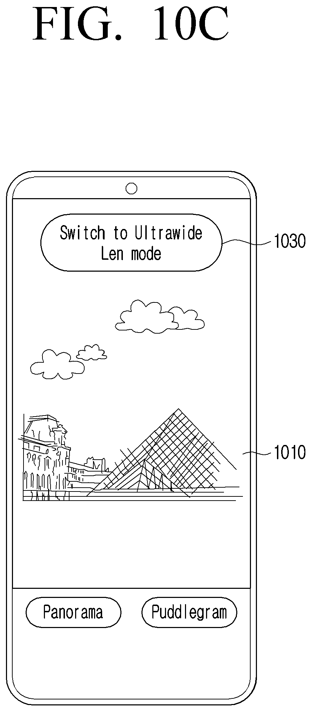

If a symmetric object is searched in the second image in the step S940-Y, the electronic device 100 may display a guide UI for suggesting a lens switch on the first preview in the step S950. For example, as illustrated in FIG. 10A, while providing the first preview 1010 based on the first image obtained through the first lens (e.g., the main lens), the electronic device 100 may not search a symmetric object from the first image. Then, as illustrated in FIG. 10B, the electronic device 100 may obtain the second image 1020 from the background, and search a symmetric object 1025 from the second image. Then, if a symmetric object is not searched from the first image, but a symmetric object is searched from the second image, the electronic device 100 may display a guide UI 1030 for suggesting a lens switch on the first preview 1010 as illustrated in FIG. 10C.

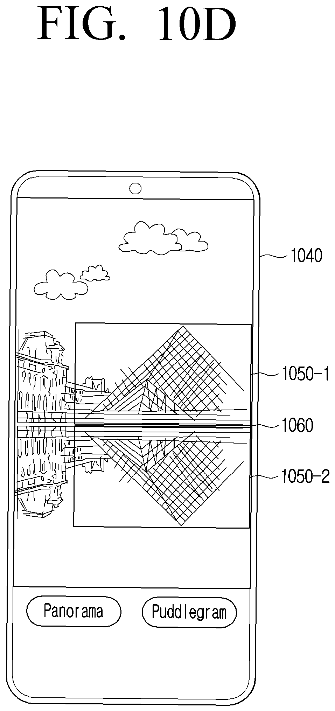

The electronic device 100 may convert the first preview into the second preview obtained based on the second image in the step S955. Specifically, if a user instruction selecting the guide UI 1030 as illustrated in FIG. 10C is input, the electronic device 100 may convert the first preview 1010 into the second preview 1040 as illustrated in FIG. 10D. Meanwhile, if a user instruction selecting the guide UI 1030 is input, the electronic device 100 may convert the preview, but this is merely an example, and when a predetermined time passes after the guide UI 1030 is displayed, the electronic device 100 may automatically convert the first preview 1010 into the second preview 1040.

The electronic device 100 may display the symmetric axis of the symmetric object included in the second image on the second preview in the step S960. For example, as illustrated in FIG. 10D, the electronic device 100 may display the symmetric axis 1060 together with the highlights 1050-1, 1050-2 for the symmetric object on the second preview 1040.

The electronic device 100 may determine whether the location of the symmetric axis is located in the first area in the preview (i.e., the first preview or the second preview) in the step S670. Here, the first area may be a predetermined area for photographing an optimal puddlegram image, but this is merely an example, and the first area may be an area determined by the user preference model explained in FIG. 8.

If it is determined that the location of the symmetric axis is beyond the first area in the preview in the step S965-N, the electronic device 100 may display a guide UI guiding a movement of the electronic device 100 such that the symmetric axis is located in the first area on the preview in the step S970.

The electronic device 100 may determine whether a user's instruction for photographing was input in the step S975. Here, the user's instruction for photographing may be an instruction selecting a predetermined icon included in the display 120, but this is merely an example, and it may be an instruction selecting a separate physical photographing button, etc.

If a user's instruction for photographing is input in the step S975-Y, the electronic device 100 may store the photographed image in the step S980.

Meanwhile, the display 120 included in the electronic device 100 according to an embodiment of the disclosure may be implemented as a plurality of displays including a flexible display and a rigid display, and may be implemented as various form factors. Also, while the electronic device 100 is folded by a first angle, the electronic device 100 may generate a reflective object that is an object reflected through a reflective surface which is a part of the flexible display in the display 120, and obtain a symmetric object. More detailed explanation in this regard will be described with reference to FIG. 11A to FIG. 18C.

FIG. 11A to FIG. 11C are diagrams for illustrating form factors of an electronic device according to various embodiments of the disclosure. First, according to an embodiment of the disclosure, a flexible display may be arranged on one surface (e.g., the front surface) of the electronic device 100, and a rigid display or a flexible display may be arranged on the other surface (e.g., the rear surface) of the electronic device 100. In particular, the electronic device 100 may further include a hinge part that makes the electronic device 100 folded or unfolded, and the display 120 (in particular, the flexible display) may be folded or unfolded as the electronic device 100 is folded or unfolded centered around the hinge part.

According to an embodiment of the disclosure, as illustrated in the upper part of FIG. 11A, a first display 1110 may be arranged in one area of the first surface (or the rear surface) of the electronic device 100, and as illustrated in the lower part of FIG. 11A, the second display 1120 may be arranged on the second surface (or the front surface) of the electronic device 100. In particular, as illustrated in the upper part of FIG. 11A, the first display 1110 is a rigid display in a quadrangle form wherein the horizontal length is longer, and for example, it may have a size of 4.6 inches in a ratio of 21:9, and support a resolution of 1680 x 720. Also, as illustrated in the lower part of FIG. 11A, the second display 1120 is a flexible display that can be folded or unfolded by the hinge part, and it may have a size of 7.3 inches in a ratio of 7:5, and support a resolution of 2152 x 1536.

Also, the electronic device 100 may be folded by an in-folding method wherein the first area 1120-1 and the second area 1120-2 of the second display 1120 are folded to face each other based on the hinge part.

In addition, the electronic device 100 may include the camera 110 in the first area 1120-1 of the second display 1120. Here, the camera 110 may be implemented as an under-display camera, and as illustrated in FIG. 11A, the camera 110 may be arranged in the upper central area of the first area 1120-1. However, this is merely an example, and for obtaining a more effective puddlegram image, the camera 110 may be arranged in the central area of the first area 1120-1 to be closer to the hinge part.

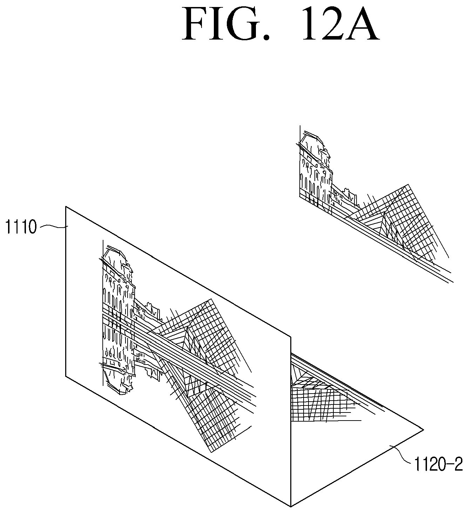

In particular, the second area 1120-2 of the second display 1120 may perform a role of a reflective surface. Specifically, as illustrated in FIG. 12A, while the second display 1120 is folded by the first angle by the hinge part, an actual object may be reflected by the second area 1120-2 which is a reflective surface, and a reflective object may be generated. By this, the electronic device 100 may photograph a puddlegram image including a symmetric object including an actual object and a reflective object, and provide a preview on the first display 1110.

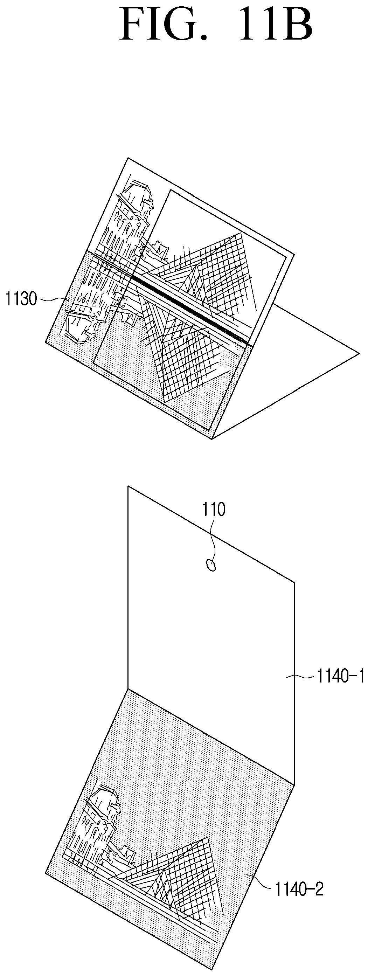

According to another embodiment of the disclosure, as illustrated in the upper part of FIG. 11B, the first display 1130 may be arranged in one area of the first surface (or the rear surface) of the electronic device 100, and as illustrated in the lower part of FIG. 11B, the second display 1140 may be arranged on the second surface (or the front surface) of the electronic device 100. In particular, as illustrated in the upper part of FIG. 11B, the first display 1130 is a rigid display in a quadrangle form, and for example, it may have a size of 3.2 inches in a ratio of 11:9, and support a resolution of 1320 x 1080. Also, as illustrated in the lower part of FIG. 11B, the second display 1140 is a flexible display in a form wherein the vertical length is longer that can be folded or unfolded by the hinge part, and for example, it may have a size of 6.7 inches in a ratio of 22:9, and support a resolution of 2640 x 1080.

Also, the electronic device 100 may be folded by an in-folding method wherein the first area 1140-1 and the second area 1140-2 of the second display 1140 are folded to face each other based on the hinge part.

In addition, the electronic device 100 may include the camera 110 in the first area 1140-1 of the second display 1140. Here, the camera 110 may be implemented as an under-display camera, and as illustrated in the lower part of FIG. 11B, the camera 110 may be arranged in the upper central area of the first area 1140-1. However, this is merely an example, and for obtaining a more effective puddlegram image, the camera 110 may be arranged in the central area of the first 1140-1 to be closer to the hinge part.

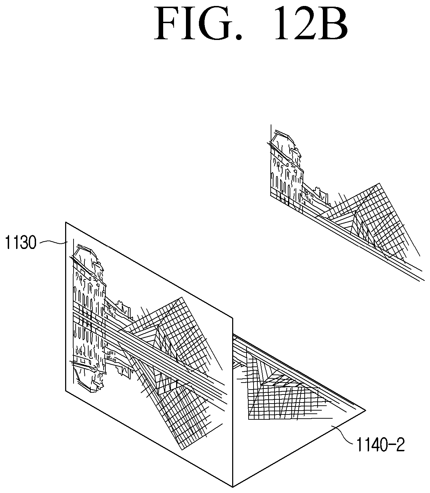

In particular, the second area 1140-2 of the second display 1140 may perform a role of a reflective surface. Specifically, as illustrated in FIG. 12B, while the second display 1140 is folded by the first angle by the hinge part, an actual object may be reflected by the second area 1140-2 which is a reflective surface, and a reflective object may be generated. By this, the electronic device 100 may photograph a puddlegram image including a symmetric object including an actual object and a reflective object, and provide a preview on the first display 1130.

Meanwhile, the first display 1130 may be implemented as a rigid display, but this is merely an example, and it may be implemented as a flexible display arranged on the first surface of the electronic device 100.

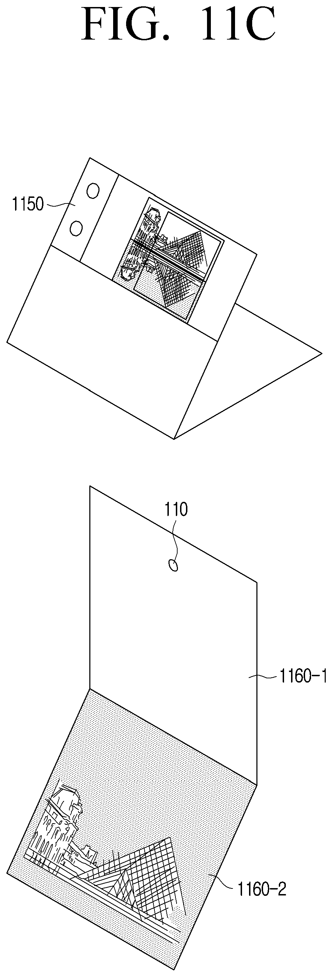

According to another embodiment of the disclosure, as illustrated in the upper part of FIG. 11C, the first display 1150 may be arranged in one area of the first surface (or the rear surface) of the electronic device 100, and as illustrated in the lower part of FIG. 11C, the second display 1160 may be arranged on the second surface (or the front surface) of the electronic device 100. In particular, as illustrated in the upper part of FIG. 11C, the first display 1150 is a rigid display in a quadrangle form arranged in some areas of the first surface, and for example, it may have a size of 1.9 inches in a ratio of 1.97:1, and support a resolution of 512 x 260. As the explanation below will be identical to what was explained in FIG. 11B, overlapping explanation will be omitted.

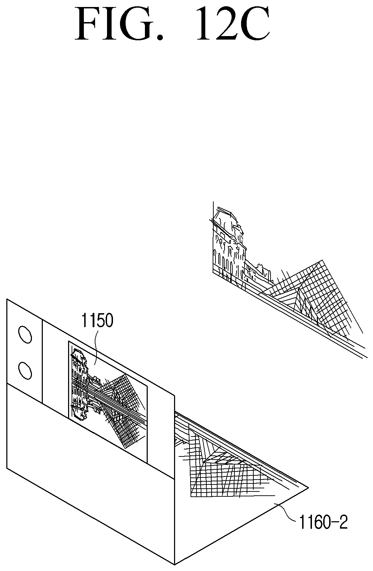

In particular, the second area 1160-2 of the second display 1160 may perform a role of a reflective surface. Specifically, as illustrated in FIG. 12C, while the second display 1160 is folded by the first angle by the hinge part, an actual object may be reflected by the second area 1160-2 which is a refletive surface, and a reflective object may be generated. By this, the electronic device 100 may photograph a puddlegram image including a symmetric object including an actual object and a reflective object, and provide a preview on the first display 1150.

In particular, for photographing an optimal puddlegram image while operating in the first photographing mode in a state wherein the electronic device 100 is folded by the first angle, the electronic device 100 may display a guide UI guiding folding of the electronic device 100 so as to move the symmetric axis to a predetermined area.

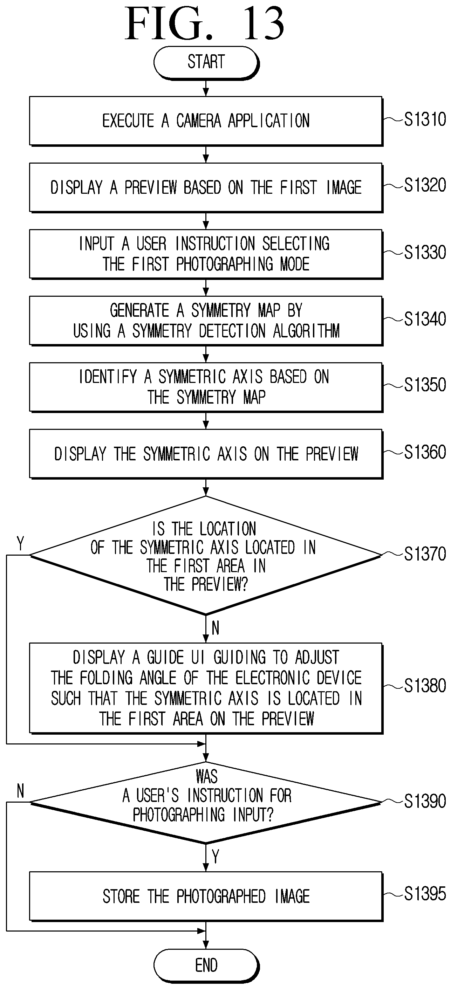

FIG. 13 is a flow chart for illustrating a method of providing a guide UI that guides folding or unfolding of an electronic device such that a symmetric axis is located in a first area while operating in a puddlegram photographing mode according to an embodiment of the disclosure.

First, the electronic device 100 may execute the camera application in the step S1310. For example, if a user input for executing the camera application (e.g., a user input selecting the icon of the camera application) is received, the electronic device 100 may execute the camera application, and display an execution screen of the camera application. Here, the electronic device 100 may be in a state of being folded by the first angle.

The electronic device 100 may display a preview based on the first image in the step S1320. Here, the electronic device 100 may display a preview based on the first image photographed through the wide-angle lens in the camera 110. Here, the electronic device 100 may display the preview by performing image processing for the first image, but this is merely an example, and the electronic device 100 may display the first image itself as the preview. In particular, the electronic device 100 may display the preview on the first display 1110, 1130, 1150 while being folded by the first angle.

The electronic device 100 may receive input of a user instruction selecting the first photographing mode in the step S1330. Specifically, the electronic device 100 may receive input of a user instruction selecting the icon corresponding to the first photographing mode (i.e., the puddlegram photographing mode) among the icons displayed on the preview. When the user instruction selecting the first photographing mode is input, the electronic device 100 may operate in the first photographing mode.

The electronic device 100 may generate a symmetry map by using the symmetry detection algorithm in the step S1340, and identify a symmetric axis based on the symmetry map in the step S1350.

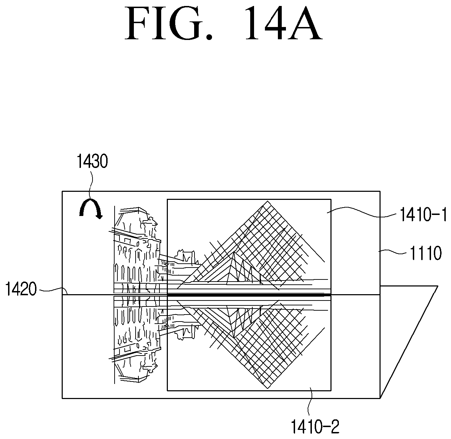

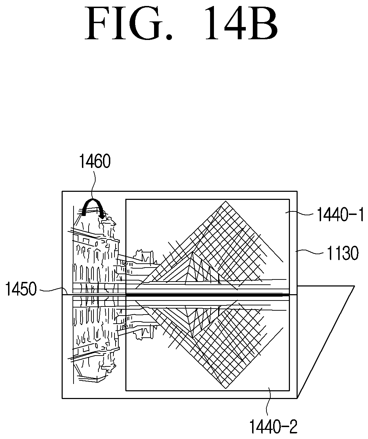

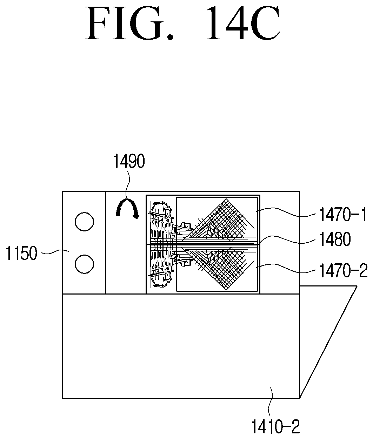

Then, the electronic device 100 may display the symmetric axis on the preview in the step S1360. Here, as illustrated in FIG. 14A to FIG. 14C, the electronic device 100 may display the symmetric axis 1420, 1450, 1480 on the first display 1110, 1130, 1150. In addition, as illustrated in FIG. 14A to FIG. 14C, the electronic device 100 may display the highlight 1410-1, 1440-1, 1470-1 for the actual object and the highlight 1410-2, 1440-2, 1470-2 for the reflective object together with the symmetric axis 1420, 1450, 1480.

Here, the electronic device 100 may determine whether the location of the symmetric axis is located in the first area in the preview in the step S1370. Here, the first area is a predetermined area for photographing an optimal puddlegram image, and for example, it may be the central area of the preview, but this is merely an example, and the first area may be an area determined by the user preference model.

If it is determined that the location of the symmetric axis is beyond the first area in the preview in the step S1370-N, the electronic device 100 may display a guide UI guiding to adjust the folding angle of the electronic device 100 such that the symmetric axis is located in the first area on the preview in the step S1380. For example, while the electronic device 100 is folded by the first angle (e.g., the angle between the first area and the second area of the second display is 95 degrees), if it is determined that the location of the symmetric axis is beyond the first area of the preview, the electronic device 100 may display a guide UI 1430, 1460, 1490 guiding folding of the electronic device 100, as illustrated in FIG. 14A to FIG. 14C. Here, as illustrated in FIG. 14A to FIG. 14C, the electronic device 100 may display the guide UI 1430, 1460, 1490 in the form of an arrow guiding folding of the electronic device 100, but this is merely an example, and it is obvious that a text message or a voice message guiding folding of the electronic device 100 can be provided together.

Meanwhile, the electronic device 100 may determine folding or unfolding of the electronic device 100 according to the location of the symmetric axis. If it is determined that the symmetric axis is located lower than the first area, the electronic device 100 may display a guide UI guiding folding of the electronic device 100, and if it is determined that the symmetric axis is located upper than the first area, the electronic device 100 may display a guide UI guiding unfolding of the electronic device 100.

In addition, while it was explained in FIG. 14A to FIG. 14C that a guide UI in the form of an arrow guiding folding or unfolding of the electronic device 100 is provided, but this is merely an example, and a guide UI guiding zoom-in/zoom-out or guiding the electronic device 100 (or the camera 110) to move or rotate (in particular, rotation in a pitch direction) can obviously be provided.

If the user folds the electronic device 100 by a second angle (e.g., 80 degrees) through the guide UI 1430, 1460, 1490 as illustrated in FIG. 14A to FIG. 14C, the electronic device 100 may display a preview wherein the symmetric axis is located in the first area. Here, if the symmetric axis is located in the first area, the electronic device 100 may provide an image effect guiding that the symmetric axis is located in the first area (e.g., an image effect that at least one of the highlights 710, 720 or the symmetric axis 730 is changed to a different color or flickers, etc.) or a guide message, and remove the guide UI 1430, 1460, 1490 from the preview.

The electronic device 100 may determine whether a user's instruction for photographing was input in the step S1390. Here, the user's instruction for photographing may be an instruction selecting a predetermined icon included in the first display 1110, 1130, 1150, but this is merely an example, and it may be an instruction selecting a separate physical photographing button, etc.

If a user's instruction for photographing is input in the step S1390-Y, the electronic device 100 may store the photographed image in the step S1395.

As in the case of a form factor illustrated in FIG. 11B and FIG. 11C among the plurality of form factors, in case the camera 110 is not located to be close to the hinge part (i.e., in case the camera 110 is located in the upper part), when a symmetric object is not searched, the electronic device 100 may provide a guide UI guiding the user such that the electronic device 100 is moved to be closer to an object on the preview.

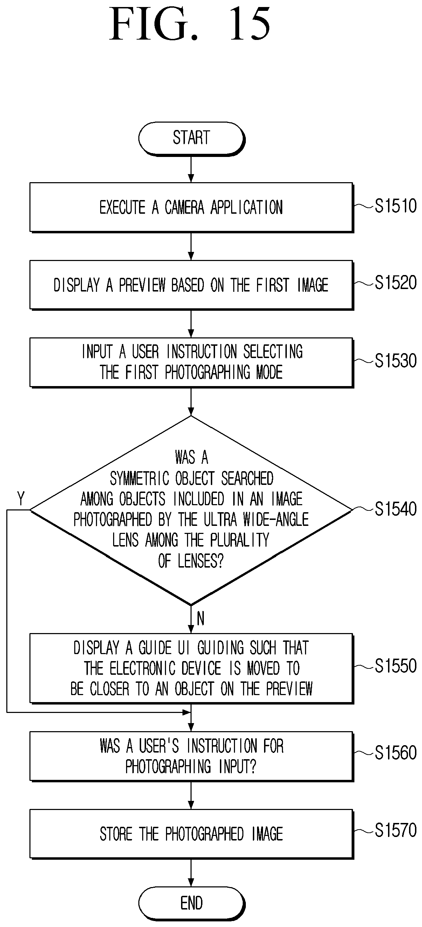

FIG. 15 is a flow chart for illustrating a method of providing a guide UI that guides a movement of an electronic device to detect a symmetric object while operating in a puddlegram photographing mode according to an embodiment of the disclosure.

First, the electronic device 100 may execute the camera application in the step S1510. Specifically, if a user input for executing the camera application (e.g., a user input selecting the icon of the camera application) is received, the electronic device 100 may execute the camera application, and display an execution screen of the camera application. Here, the electronic device 100 may be in a state of being folded by the first angle.

The electronic device 100 may display a preview based on the first image in the step S1520. Here, the electronic device 100 may display a preview based on the first image photographed through the first lens in the camera 110. In particular, the electronic device 100 may display a preview on the first display 1110, 1130, 1150 while being folded by the first angle.

The electronic device 100 may receive input of a user instruction selecting the first photographing mode in the step S1530. Specifically, the electronic device 100 may receive input of a user instruction selecting an icon corresponding to the first photographing mode (i.e., the puddlegram photographing mode) among the icons displayed on the preview. When the user instruction selecting the first photographing mode is input, the electronic device 100 may operate in the first photographing mode.

The electronic device 100 may determine whether a symmetric object is searched among objects included in an image photographed by the ultra wide-angle lens among the plurality of lenses in the step S1540. Here, the electronic device 100 may provide a preview based on the image photographed by the ultra wide-angle lens, but this is merely an example, and the electronic device 100 may photograph an image by the ultra wide-angle lens in the background.

If a symmetric object is not searched in the step S1540, the electronic device 100 may display a guide UI guiding such that the electronic device 100 is moved to be closer to an object on the preview in the step S1550. If a symmetric object is searched in the image photographed by the ultra wide-angle lens after the electronic device 100 moved according to the guide UI, the electronic device 100 may display a symmetric axis and a highlight for the searched symmetric object. Then, as explained above, in case the symmetric axis is beyond the first area, the electronic device 100 may also provide a guide UI guiding a movement of the electronic device 100 on the preview.

The electronic device 100 may determine whether a user's instruction for photographing was input in the step S1560.

If a user's instruction for photographing is input in the step S1560-Y, the electronic device 100 may store the photographed image in the step S1570.

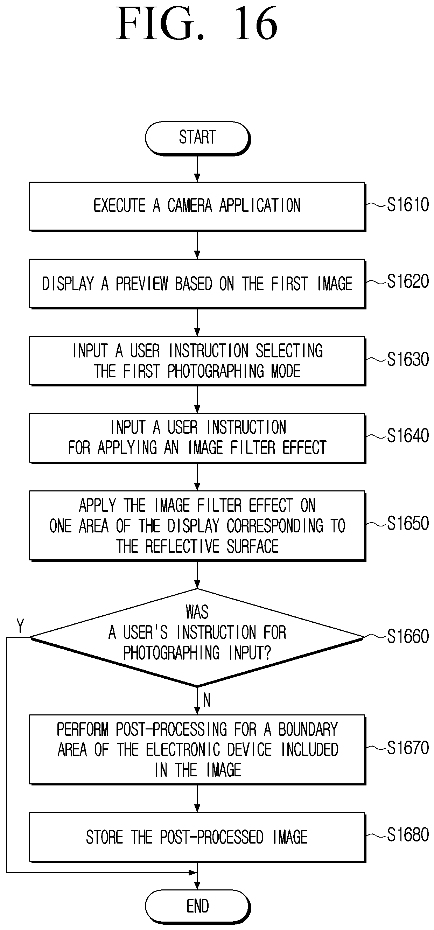

FIG. 16 is a flow chart for illustrating a method of providing an image filter effect on a reflective surface while operating in a puddlegram photographing mode according to an embodiment of the disclosure. As the steps S1610 to S1630 illustrated in FIG. 16 are identical to the steps S1310 to S1330 in FIG. 13, overlapping explanation will be omitted.

The electronic device 100 may receive input of a user instruction for applying an image filter effect in the step S1640. Here, the user instruction for applying the image filter effect may be a user instruction selecting an icon corresponding to the image filter effect displayed on the first display 1110, 1130, 1150.

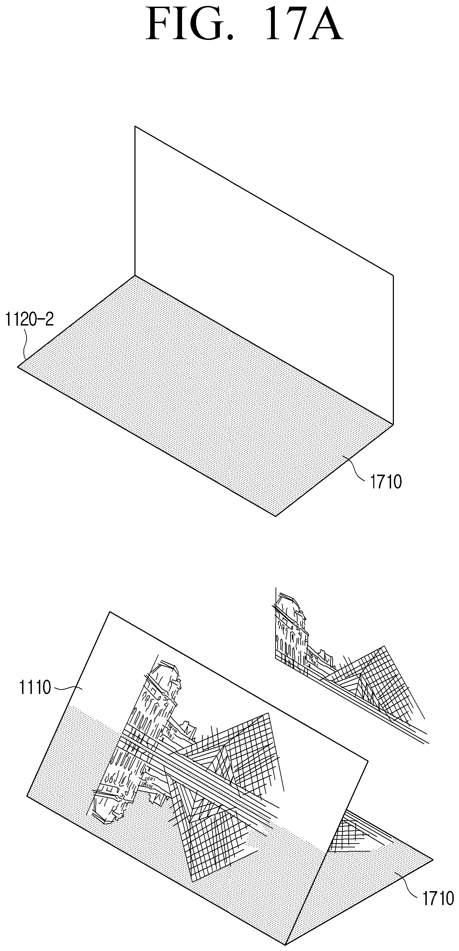

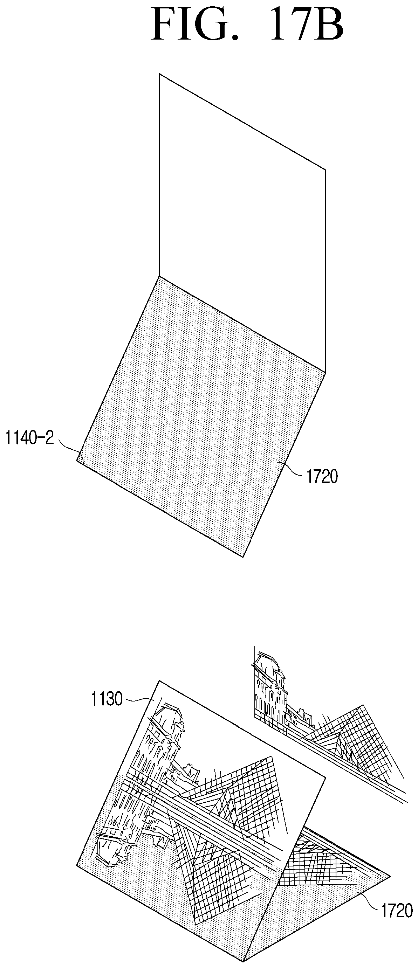

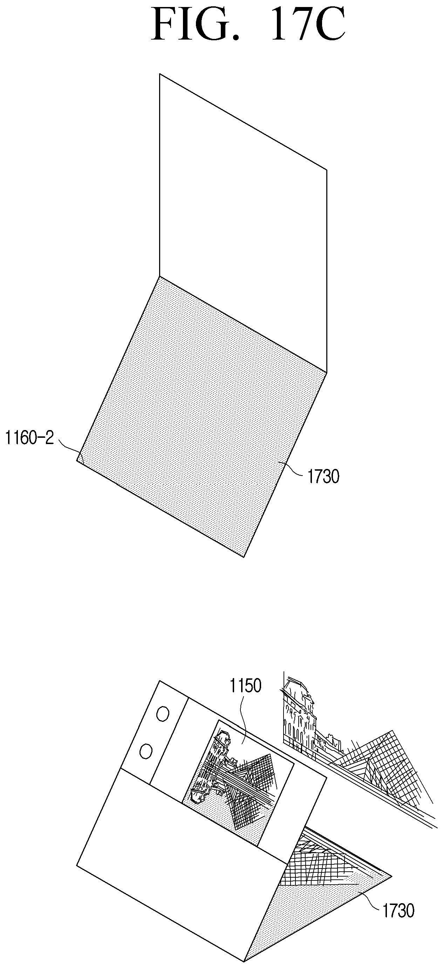

The electronic device 100 may apply the image filter effect on one area of the display 120 corresponding to the reflective surface in the step S1650. Specifically, as illustrated in the upper part of FIG. 17A, the upper part of FIG. 17B, and the upper part of FIG. 17C, the electronic device 100 may provide the image filter effect 1710, 1720, 1730 on the second area 1120-2, 1140-2, 1160-2 of the second display 1120, 1140, 1160. Here, the image filter effect may be an effect of displaying a predetermined color (e.g., blue, etc.) or a predetermined pattern on the second area 1120-2, 1140-2, 1160-2.

Here, the image filter effect may be a predetermined image filter, but this is merely an example, and it may be an image filter selected by the user among the plurality of image filters.

Here, as illustrated in the lower part of FIG. 17A, the lower part of FIG. 17B, and the lower part of FIG. 17C, the electronic device 100 may identify a puddlegram image to which the image filter effect provided on the reflective surface is applied through the preview displayed on the first display 1110, 1130, 1150 of the electronic device 100. Then, the user may select an image filter that matches the current image the best among the plurality of image filters.

The electronic device 100 may determine whether a user's instruction for photographing was input in the step S1660.

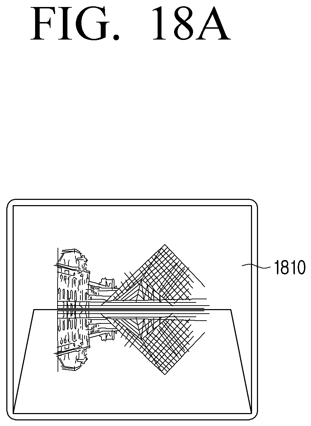

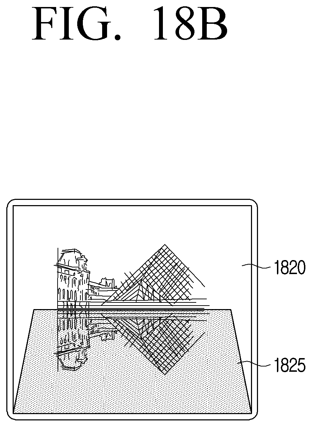

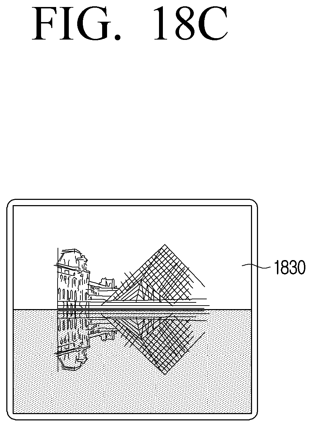

If a user's instruction for photographing is input in the step S1660-Y, the electronic device 100 may perform post-processing for a boundary area of the electronic device 100 included in the image in the step S1670. Specifically, in the case of photographing a puddlegram image including a reflective object that was reflected by the reflective surface, as illustrated in FIG. 18A, the electronic device 100 may provide a preview 1810 including a boundary area of the reflective surface (i.e., the second area 1120-2, 1140-2, 1160-2 of the second display 1120, 1140, 1160) of the electronic device 100. Also, as illustrated in FIG. 18B, in case an image filter effect 1825 is applied to the reflective surface (i.e., the second area 1120-2, 1140-2, 1160-2 of the second display 1120, 1140, 1160) of the electronic device 100, the electronic device 100 may provide a preview 1820 including a boundary area of the reflective surface to which the image filter effect 1825 is applied. Here, as illustrated in FIG. 18C, the electronic device 100 may remove the boundary area of the reflective surface, and perform post-processing such that the image filter effect is applied to the entire area corresponding to the reflective surface based on the symmetric axis, and provide a post-processed preview 1830. By this, the user can obtain a puddlegram image not included in the boundary area of the electronic device 100, and can thereby obtain a puddlegram image including a reflective object that looks as if it was reflected by an actual reflective surface (e.g., water, etc.) but not the reflective surface of the electronic device 100.

Then, the electronic device 100 may store the post-processed image in the step S1680.

Meanwhile, in the aforementioned embodiment, it was explained that post-processing for the boundary area of the electronic device included in an image is performed after an instruction for photographing is input, but this is merely an example, and post-processing for the boundary area of the electronic device included in an image may be performed in real time, and an image wherein the boundary area was removed may be provided on the preview.

Also, in the aforementioned embodiment, it was explained that a predetermined image filter effect is applied, but this is merely an example, and a plurality of recommended image filter effects may be provided by analyzing information detected by the sensor and a currently photographed image. Specifically, the electronic device 100 may determine a recommended image filter effect for recommending to the user based on information on the ambient brightness detected by the sensor 150, information on colors included in an image, and information on objects included in an image. Then, when a recommended image filter effect is selected, the electronic device 100 may control the display 120 to display the recommended image filter effect in at least some areas of the display 120.

Meanwhile, in the aforementioned embodiment, it was explained that, if a user instruction for entering the first photographing mode is input, the electronic device 100 enters the first photographing mode, but this is merely an example, and the electronic device 100 may enter the photographing mode automatically as the first photographing mode according to a folding angle by which it is currently folded without a separate user input.

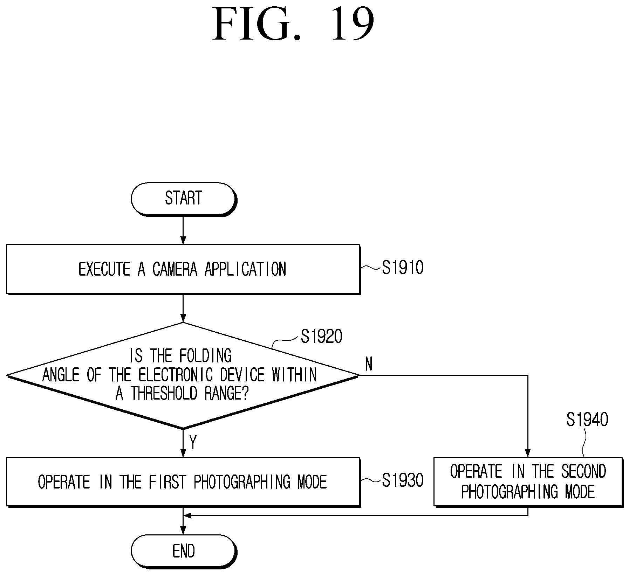

FIG. 19 is a flow chart for illustrating a method of entering a puddlegram photographing mode automatically according to a folding angle of an electronic device according to an embodiment of the disclosure.

First, the electronic device 100 may execute the camera application in the step S1510. Specifically, if a user input for executing the camera application (e.g., a user input selecting the icon of the camera application) is received, the electronic device 100 may execute the camera application, and display an execution screen of the camera application.

The electronic device 100 may determine whether the folding angle of the electronic device 100 is within a threshold range in the step S1920. That is, the electronic device 100 may determine whether the folding angle between the first area 1120-1, 1140-1, 1160-1 and the second area 1120-2, 1140-2, 1160-2 of the second display 1120, 1140, 1160 is within a threshold range (e.g., between 70 and 80 degrees).

If the folding angle of the electronic device 100 is within the threshold range in the step S1920-Y, the electronic device 100 may operate in the first photographing mode in the step S1930. That is, if the electronic device 100 is folded by the first angle within the threshold range, the electronic device 100 may operate in the puddlegram photographing mode.

If the folding angle of the electronic device 100 is beyond the threshold range in the step S1920-N, the electronic device 100 may operate in the second photographing mode in the step S1940. Here, the second photographing mode may be a normal mode, but this is merely an example, and it may be a different photographing mode (e.g., a self photographing mode, a panorama photographing mode, etc.).

Meanwhile, in the aforementioned embodiment, it was explained that the electronic device 100 searches a symmetric object through a symmetry detection algorithm, but this is merely an example, and the electronic device 100 may search a symmetric object in an image through a trained neural network model. That is, the electronic device 100 may obtain information on a symmetric object by inputting an image into a trained neural network model.

Meanwhile, in FIG. 3 to FIG. 19, various embodiments were explained, but the various embodiments can obviously be operated as a combination of a plurality of embodiments, but not as separate embodiments. Also, explanation for one embodiment can obviously be applied to another embodiment.

Functions related to artificial intelligence according to the disclosure are operated through the processor and the memory of the electronic device 100.

The processor may consist of one or a plurality of processors. Here, the one or plurality of processors may include at least one of a central processing unit (CPU), a graphic processing unit (GPU), or a neural processing unit (NPU), but the processors are not limited to the aforementioned examples of processors.

A CPU is a generic-purpose processor that can perform not only general operations but also artificial intelligence operations, and it can effectively execute a complex program through a multilayer cache structure. A CPU is advantageous for a serial processing method that enables a systemic linking between the previous calculation result and the next calculation result through sequential calculations. A generic-purpose processor is not limited to the aforementioned examples excluding cases wherein it is specified as the aforementioned CPU.

A GPU is a processor for mass operations such as a floating point operation used for graphic processing, etc., and it can perform mass operations in parallel by massively integrating cores. In particular, a GPU may be advantageous for a parallel processing method such as a convolution operation, etc. compared to a CPU. Also, a GPU may be used as a co-processor for supplementing the function of a CPU. A processor for mass operations is not limited to the aforementioned examples excluding cases wherein it is specified as the aforementioned GPU.

An NPU is a processor specialized for an artificial intelligence operation using an artificial neural network, and it can implement each layer constituting an artificial neural network as hardware (e.g., silicon). Here, the NPU is designed to be specialized according to the required specification of a company, and thus it has a lower degree of freedom compared to a CPU or a GPU, but it can effectively process an artificial intelligence operation required by the company. Meanwhile, as a processor specialized for an artificial intelligence operation, an NPU may be implemented in various forms such as a tensor processing unit (TPU), an intelligence processing unit (IPU), a vision processing unit (VPU), etc. An artificial intelligence processor is not limited to the aforementioned examples excluding cases wherein it is specified as the aforementioned NPU.

Also, the one or plurality of processors may be implemented as a system on chip (SoC). Here, in the SoC, the memory, and a network interface such as a bus for data communication between the processor and the memory, etc. may be further included other than the one or plurality of processors.

In case the plurality of processors are included in the system on chip (SoC) included in the electronic device, the electronic device may perform an operation related to artificial intelligence (e.g., an operation related to learning or inference of the artificial intelligence model) by using some processors among the plurality of processors. For example, the electronic device may perform an operation related to artificial intelligence by using at least one of a GPU, an NPU, a VPU, a TPU, or a hardware accelerator specified for artificial intelligence operations such as a convolution operation, a matrix product operation, etc. among the plurality of processors. However, this is merely an example, and the electronic device can obviously process an operation related to artificial intelligence by using the generic-purpose processor such as a CPU, etc.

Also, the electronic device may perform operations for functions related to artificial intelligence by using a multicore (e.g., a dual core, a quad core, etc.) included in one processor. In particular, the electronic device may perform artificial intelligence operations such as a convolution operation, a matrix product operation, etc. in parallel by using the multicore included in the processor.

The one or plurality of processors perform control such that input data is processed according to predefined operation rules or an artificial intelligence model stored in the memory. The predefined operation rules or the artificial intelligence model are characterized in that they are made through learning.

Here, being made through learning means that predefined operation rules or an artificial intelligence model having desired characteristics are made by applying a learning algorithm to a plurality of training data. Such learning may be performed in a device itself wherein artificial intelligence is performed according to the disclosure, or through a separate server/system.

An artificial intelligence model may consist of a plurality of neural network layers. At least one layer has at least one weight value, and performs an operation of the layer through the operation result of the previous layer and at least one defined operation. As examples of a neural network, there are a convolutional neural network (CNN), a deep neural network (DNN), a recurrent neural network (RNN), a restricted Boltzmann Machine (RBM), a deep belief network (DBN), a bidirectional recurrent deep neural network (BRDNN), deep Q-networks, and a transformer, but the neural network in the disclosure is not limited to the aforementioned examples excluding specified cases.

A learning algorithm is a method of training a specific subject device (e.g., a robot) by using a plurality of training data and thereby making the specific subject device make a decision or make prediction by itself. As examples of learning algorithms, there are supervised learning, unsupervised learning, semi-supervised learning, or reinforcement learning, but learning algorithms in the disclosure are not limited to the aforementioned examples excluding specified cases.

Meanwhile, the method according to the various embodiments of the disclosure may be provided while being included in a computer program product. A computer program product refers to a product, and it can be traded between a seller and a buyer. A computer program product can be distributed in the form of a storage medium that is readable by machines (e.g.: compact disc read only memory (CD-ROM)), or may be distributed directly between two user devices (e.g.: smartphones), and distributed on-line (e.g.: download or upload) through an application store (e.g.: Play Store™). In the case of on-line distribution, at least a portion of a computer program product (e.g.: a downloadable app) may be stored in a storage medium such as the server of the manufacturer, the server of the application store, and the memory of the relay server at least temporarily, or may be generated temporarily.

Also, the method according to the various embodiments of the disclosure may be implemented as software including instructions stored in machine-readable storage media, which can be read by machines (e.g.: computers). The machines refer to devices that call instructions stored in a storage medium, and can operate according to the called instructions, and the devices may include an electronic device according to the aforementioned embodiments (e.g.: a TV)

Meanwhile, a storage medium readable by machines may be provided in the form of a non-transitory storage medium. Here, the term 'a non-transitory storage medium' only means that the device is a tangible device, and does not include signals (e.g.: electromagnetic waves), and the term does not distinguish a case wherein data is stored in the storage medium semi-permanently and a case wherein data is stored temporarily. For example, 'a non-transitory storage medium' may include a buffer wherein data is temporarily stored.

**In** case an instruction is executed by the processor, the processor may perform a function corresponding to the instruction by itself, or by using other components under its control. An instruction may include a code that is generated or executed by a compiler or an interpreter.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

**Claims**

1. An electronic device comprising:

a camera including a plurality of lenses;
a display;
memory storing at least one instruction; and
at least one processor that is connected with the camera, the display, and the memory, and controls the electronic device,
wherein the at least one processor is configured to, by executing the at least one instruction:

control the display to display a preview based on an image obtained by the camera, based on a user instruction selecting a first photographing mode being input, search a symmetric object among objects included in the image, and
perform focusing for the searched symmetric object.

2. The electronic device of claim 1,
wherein the at least one processor is configured to:

obtain a symmetry map by using a symmetry detection algorithm,
search the symmetric object among the objects included in the image by using the symmetry map, and
control the display to display a highlight corresponding to the searched symmetric object on the preview.

3. The electronic device of claim 2,
wherein the at least one processor is configured to:

identify a symmetric axis of a symmetric object by using the symmetry map,
control the display to display the identified symmetric axis on the preview,
determine whether the location of the symmetric axis is located in a first area in the preview, and
based on determining that the location of the symmetric axis is beyond the first area in the preview, control the display to display a first guide UI guiding a movement of the electronic device such that the symmetric axis is located in the first area on the preview.

4. The electronic device of claim 3,
wherein the first area is determined according to a photographing direction of a symmetric object included in puddlegram images photographed by the user, the location of the symmetric object in the preview, and a ratio of the symmetric object included in the puddlegram images.

5. The electronic device of claim 3,
wherein the at least one processor is configured to:

control the display to display a first preview based on a first image photographed by using a first lens among the plurality of lenses,
based on a user instruction selecting the first photographing mode being input while the first preview is displayed, obtain a second image by using a second lens different from the first lens among the plurality of lenses from a background,
based on the symmetric object not being searched in the first image but the symmetric object being searched in the second image, control the display to convert the first preview into a second preview obtained on the basis of the second image,
identify a symmetric axis of a symmetric object included in the second image, and
control the display to display the identified symmetric axis on the second preview.

6. The electronic device of claim 1,
wherein the electronic device further comprises:

a hinge part that makes the electronic device folded or unfolded, and
the display is folded or unfolded as the electronic device is folded or unfolded centered around the hinge part, and
the at least one processor is configured to:

based on a user instruction selecting the first photographing mode being input while the electronic device is folded by a first angle by the hinge part, identify a symmetric axis of a symmetric object generated by a reflective surface among a plurality of surfaces included in the electronic device among the objects included in the image, and control the display to display the symmetric axis on the preview,
determine whether the location of the symmetric axis is located in the first area in the preview, and
based on determining that the location of the symmetric axis is beyond the first area in the preview, control the display to display a second guide UI guiding to adjust a folding angle of the electronic device so as to locate the symmetric axis in the first area on the preview.

7. The electronic device of claim 6,
wherein the at least one processor is configured to:

based on a user instruction selecting the first photographing mode being input while the electronic device is folded by the first angle by the hinge part, determine whether the symmetric object is searched among the objects included in the image photographed by an ultra wide-angle lens among the plurality of lenses, and
based on the symmetric object not being searched, control the display to display a third guide UI guiding such that the electronic device is moved to be closer to an object on the preview.

8. The electronic device of claim 6,

wherein the reflective surface is a surface wherein at least some parts of the display are arranged, and
the at least one processor is configured to:
control the display to display an image filter effect on the at least some parts of the display.

9. The electronic device of claim 8, further comprising:

a sensor for detecting information on the ambient environment,
wherein the at least one processor is configured to:

determine a recommended image filter effect for recommending to a user based on information on the ambient brightness detected by the sensor, information on colors included in the image, and information on the objects included in the image, and
based on the recommended image filter effect being selected, control the display to display the recommended image filter effect in the at least some parts of the display.

10. The electronic device of claim 6,
wherein the at least one processor is configured to:
based on a camera application being executed while the electronic device is folded by the first angle by the hinge part, enter the photographing mode automatically as the first photographing mode.

11. A control method for an electronic device, the method comprising:

displaying a preview based on an image obtained by a camera of the electronic device;
based on a user instruction selecting a first photographing mode being input, searching a symmetric object among objects included in the image; and
performing focusing for the searched symmetric object.

12. The control method of claim 11,
wherein the searching comprises:

obtaining a symmetry map by using a symmetry detection algorithm; and
searching the symmetric object among the objects included in the image by using the symmetry map,
and the control method comprises:
displaying a highlight corresponding to the searched symmetric object on the preview.

13. The control method of claim 12,
wherein the control method comprises:

identifying a symmetric axis of a symmetric object by using the symmetry map;
displaying the identified symmetric axis on the preview;
determining whether the location of the symmetric axis is located in a first area in the preview; and
based on determining that the location of the symmetric axis is beyond the first area in the preview, displaying a first guide UI guiding a movement of the electronic device such that the symmetric axis is located in the first area on the preview.

14. The control method of claim 13,
wherein the first area is determined according to a photographing direction of a symmetric object included in puddlegram images photographed by the user, the location of the symmetric object in the preview, and a ratio of the symmetric object included in the puddlegram images.

15. The control method of claim 13,
wherein the displaying the preview comprises:

displaying a first preview based on a first image photographed by using a first lens among a plurality of lenses included in the camera, and the control method comprises:

based on a user instruction selecting the first photographing mode being input while the first preview is displayed, obtaining a second image by using a second lens different from the first lens among the plurality of lenses from a background;
based on the symmetric object not being searched in the first image but the symmetric object being searched in the second image, converting the first preview into a second preview obtained on the basis of the second image;
identifying a symmetric axis of a symmetric object included in the second image; and
displaying the identified symmetric axis on the second preview.

# FIG. 1

Panorama    Puddlegram

# FIG. 2

<u>100</u>

# FIG. 3

START

EXECUTE A CAMERA APPLICATION ~S310

DISPLAY A PREVIEW BASED ON THE FIRST IMAGE ~S320

INPUT A USER INSTRUCTION SELECTING
THE FIRST PHOTOGRAPHING MODE ~S330

GENERATE A SYMMETRY MAP BY
USING A SYMMETRY DETECTION ALGORITHM ~S340

SEARCH A SYMMETRIC OBJECT BASED ON
THE SYMMETRY MAP ~S350

PERFORM FOCUSING FOR THE SYMMETRIC OBJECT ~S360

WAS
A USER'S INSTRUCTION FOR
PHOTOGRAPHING INPUT? ~S370

N

Y

STORE THE PHOTOGRAPHED IMAGE ~S380

END

# FIG. 4

410        420        430        440        450

# FIG. 5

# FIG. 6

START

EXECUTE A CAMERA APPLICATION —S610

DISPLAY A PREVIEW BASED ON THE FIRST IMAGE —S620

INPUT A USER INSTRUCTION SELECTING
THE FIRST PHOTOGRAPHING MODE —S630

GENERATE A SYMMETRY MAP BY USING A SYMMETRY DETECTION ALGORITHM —S640

IDENTIFY A SYMMETRIC AXIS BASED ON THE SYMMETRY MAP —S650

DISPLAY THE SYMMETRIC AXIS ON THE PREVIEW —S660

IS THE
LOCATION OF THE SYMMETRIC AXIS LOCATED
IN THE FIRST AREA IN THE PREVIEW? —S670

Y

N

DISPLAY A GUIDE UI GUIDING A MOVEMENT OF THE ELECTRONIC DEVICE SUCH
THAT THE SYMMETRIC AXIS IS LOCATED IN THE FIRST AREA ON THE PREVIEW —S680

WAS A USER'S INSTRUCTION
FOR PHOTOGRAPHING INPUT? —S690

N

Y

STORE THE PHOTOGRAPHED IMAGE —S695

END

# FIG. 7A

# FIG. 7B

# FIG. 7C

EP 4 586 631 A1

# FIG. 8

START

EXECUTE A CAMERA APPLICATION — S805

DISPLAY A PREVIEW BASED ON THE FIRST IMAGE — S810

INPUT A USER INSTRUCTION SELECTING THE FIRST PHOTOGRAPHING MODE — S815

DETERMINE WHETHER A USER PREFERENCE MODEL EXISTS — S820

Y

OBTAIN A PREDETERMINED PREFERENCE MODEL — S825

N

OBTAIN THE USER PREFERENCE MODEL — S830

GENERATE A SYMMETRY MAP BY USING A SYMMETRY DETECTION ALGORITHM, AND IDENTIFY A SYMMETRIC AXIS BASED ON THE SYMMETRY MAP — S835

DISPLAY THE SYMMETRIC AXIS ON THE PREVIEW — S840

IS THE LOCATION OF THE SYMMETRIC AXIS LOCATED IN THE FIRST AREA DETERMINED BY THE OBTAINED PREFERENCE MODEL IN THE PREVIEW? — S845

N

Y

DISPLAY A GUIDE UI GUIDING A MOVEMENT OF THE ELECTRONIC DEVICE SUCH THAT THE SYMMETRIC AXIS IS LOCATED IN THE FIRST AREA ON THE PREVIEW — S850

WAS A USER'S INSTRUCTION FOR PHOTOGRAPHING INPUT? — S855

N

Y

STORE THE PHOTOGRAPHED IMAGE AND UPDATE THE USER PREFERENCE MODEL — S860

END

27

# FIG. 9A

START

EXECUTE A CAMERA APPLICATION — S905

DISPLAY THE FIRST PREVIEW BASED ON THE FIRST IMAGE OBTAINED BY USING THE FIRST LENS — S910

INPUT A USER INSTRUCTION SELECTING THE FIRST PHOTOGRAPHING MODE — S915

OBTAIN THE SECOND IMAGE IN THE BACKGROUND BY USING THE SECOND LENS — S920

S925 — WAS A SYMMETRIC OBJECT SEARCHED IN THE FIRST IMAGE? — N

Y

S940 — WAS A SYMMETRIC OBJECT SEARCHED IN THE SECOND IMAGE? — N

S945 — DISPLAY A GUIDE UI GUIDING A MOVEMENT OF THE ELECTRONIC DEVICE ON THE FIRST PREVIEW

Y

DISPLAY A GUIDE UI FOR SUGGESTING A LENS SWITCH ON THE PREVIEW — S950

IDENTIFY A SYMMETRIC AXIS OF THE SYMMETRIC OBJECT INCLUDED IN THE FIRST IMAGE — S930

CONVERT THE FIRST PREVIEW INTO THE SECOND PREVIEW OBTAINED BASED ON THE SECOND IMAGE — S955

DISPLAY THE IDENTIFIED SYMMETRIC AXIS ON THE FIRST PREVIEW — S935

DISPLAY THE SYMMETRIC AXIS OF THE SYMMETRIC OBJECT ON THE SECOND PREVIEW — S960

A

# FIG. 9B

A

IS THE LOCATION
OF THE SYMMETRIC AXIS
LOCATED IN THE FIRST AREA IN
THE PREVIEW? — S965

N

Y

DISPLAY A GUIDE UI GUIDING A MOVEMENT
OF THE ELECTRONIC DEVICE SUCH THAT
THE SYMMETRIC AXIS IS LOCATED IN
THE FIRST AREA ON THE PREVIEW — S970

WAS A USER'S INSTRUCTION
FOR PHOTOGRAPHING INPUT? — S975

N

Y

STORE THE PHOTOGRAPHED IMAGE — S980

END

# FIG. 10A

# FIG. 10B

1020

1025

# FIG. 10C

# FIG. 10D

1040

1050-1

1060

1050-2

Panorama    Puddlegram

# FIG. 11A

1110

110

1120-1

1120-2

# FIG. 11B

1130

110

1140-1

1140-2

# FIG. 11C

1150

110

1160-1

1160-2

# FIG. 12A

# FIG. 12B

# FIG. 12C

# FIG. 13

START

EXECUTE A CAMERA APPLICATION —S1310

DISPLAY A PREVIEW BASED ON THE FIRST IMAGE —S1320

INPUT A USER INSTRUCTION SELECTING
THE FIRST PHOTOGRAPHING MODE —S1330

GENERATE A SYMMETRY MAP BY
USING A SYMMETRY DETECTION ALGORITHM —S1340

IDENTIFY A SYMMETRIC AXIS BASED ON
THE SYMMETRY MAP —S1350

DISPLAY THE SYMMETRIC AXIS ON THE PREVIEW —S1360

IS THE LOCATION
OF THE SYMMETRIC AXIS LOCATED IN
THE FIRST AREA IN
THE PREVIEW? —S1370

Y

N

DISPLAY A GUIDE UI GUIDING TO ADJUST
THE FOLDING ANGLE OF THE ELECTRONIC DEVICE
SUCH THAT THE SYMMETRIC AXIS IS LOCATED IN
THE FIRST AREA ON THE PREVIEW —S1380

WAS
A USER'S INSTRUCTION FOR
PHOTOGRAPHING INPUT? —S1390

N

Y

STORE THE PHOTOGRAPHED IMAGE —S1395

END

# FIG. 14A

# FIG. 14B

# FIG. 14C

# FIG. 15

START

EXECUTE A CAMERA APPLICATION —S1510

DISPLAY A PREVIEW BASED ON THE FIRST IMAGE —S1520

INPUT A USER INSTRUCTION SELECTING
THE FIRST PHOTOGRAPHING MODE —S1530

WAS A
SYMMETRIC OBJECT SEARCHED
AMONG OBJECTS INCLUDED IN AN IMAGE
PHOTOGRAPHED BY THE ULTRA WIDE-ANGLE
LENS AMONG THE PLURALITY
OF LENSES? —S1540

Y

N

DISPLAY A GUIDE UI GUIDING SUCH THAT
THE ELECTRONIC DEVICE IS MOVED TO
BE CLOSER TO AN OBJECT ON THE PREVIEW —S1550

WAS A USER'S INSTRUCTION FOR
PHOTOGRAPHING INPUT? —S1560

STORE THE PHOTOGRAPHED IMAGE —S1570

END

# FIG. 16

```
            ┌─────────┐
            │  START  │
            └─────────┘
                 │
                 ▼
    ┌─────────────────────────────────┐
    │   EXECUTE A CAMERA APPLICATION   │───S1610
    └─────────────────────────────────┘
                 │
                 ▼
    ┌─────────────────────────────────┐
    │ DISPLAY A PREVIEW BASED ON THE FIRST IMAGE │───S1620
    └─────────────────────────────────┘
                 │
                 ▼
    ┌─────────────────────────────────┐
    │  INPUT A USER INSTRUCTION SELECTING  │───S1630
    │    THE FIRST PHOTOGRAPHING MODE      │
    └─────────────────────────────────┘
                 │
                 ▼
    ┌─────────────────────────────────┐
    │       INPUT A USER INSTRUCTION      │───S1640
    │   FOR APPLYING AN IMAGE FILTER EFFECT │
    └─────────────────────────────────┘
                 │
                 ▼
    ┌─────────────────────────────────┐
    │     APPLY THE IMAGE FILTER EFFECT ON    │
    │  ONE AREA OF THE DISPLAY CORRESPONDING TO │───S1650
    │        THE REFLECTIVE SURFACE           │
    └─────────────────────────────────┘
                 │
                 ▼
    Y       ◇─────────────────────◇
    ┌──────│      WAS               │
    │      │ A USER'S INSTRUCTION FOR │───S1660
    │      │   PHOTOGRAPHING INPUT?   │
    │       ◇─────────────────────◇
    │                 │ N
    │                 ▼
    │   ┌─────────────────────────────────┐
    │   │ PERFORM POST-PROCESSING FOR A BOUNDARY │
    │   │ AREA OF THE ELECTRONIC DEVICE INCLUDED │───S1670
    │   │            IN THE IMAGE              │
    │   └─────────────────────────────────┘
    │                 │
    │                 ▼
    │   ┌─────────────────────────────────┐
    │   │    STORE THE POST-PROCESSED IMAGE   │───S1680
    │   └─────────────────────────────────┘
    │                 │
    └─────────────────┤
                      ▼
               ┌─────────┐
               │   END   │
               └─────────┘
```

# FIG. 17A

1120-2

1710

1110

1710

# FIG. 17B

# FIG. 17C

1160-2

1730

1150

1730

# FIG. 18A

1810

# FIG. 18B

1820

1825

# FIG. 18C

1830

# FIG. 19

START

EXECUTE A CAMERA APPLICATION — S1910

IS THE FOLDING ANGLE OF THE ELECTRONIC DEVICE WITHIN A THRESHOLD RANGE? — S1920

N

Y

OPERATE IN THE FIRST PHOTOGRAPHING MODE — S1930

S1940

OPERATE IN THE SECOND PHOTOGRAPHING MODE

END

## INTERNATIONAL SEARCH REPORT

| International application No. |
|---|
| **PCT/KR2023/015670** |

### A. CLASSIFICATION OF SUBJECT MATTER

**H04N 23/67**(2023.01)i; **H04N 23/667**(2023.01)i; **H04N 23/63**(2023.01)i; **H04N 23/80**(2023.01)i; **H04N 5/77**(2006.01)i; **H04N 23/55**(2023.01)i

According to International Patent Classification (IPC) or to both national classification and IPC

### B. FIELDS SEARCHED

Minimum documentation searched (classification system followed by classification symbols)

H04N 23/67(2023.01); G03B 7/08(2006.01); G08G 1/16(2006.01); H04M 1/725(2006.01); H04N 5/225(2006.01); H04N 5/232(2006.01); H04N 5/247(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 대칭 이미지(symmetry image), 퍼들그램(puddlegram), 촬영 모드(photo mode), 사용자 인터페이스(UI: user interface)

### C. DOCUMENTS CONSIDERED TO BE RELEVANT

| Category* | Citation of document, with indication, where appropriate, of the relevant passages | Relevant to claim No. |
|---|---|---|
| Y | KR 10-2386398 B1 (SAMSUNG ELECTRONICS CO., LTD.) 14 April 2022 (2022-04-14)<br>See paragraphs [0018]-[0171]; claims 1-9 and 11-20; and figures 1a-14. | 1-15 |
| Y | JP 2022-015696 A (JVC KENWOOD CORP.) 21 January 2022 (2022-01-21)<br>See paragraphs [0001]-[0051]; claims 1-5; and figures 1-8. | 1-15 |
| Y | KR 10-2021-0072351 A (SAMSUNG ELECTRONICS CO., LTD.) 17 June 2021 (2021-06-17)<br>See paragraphs [0011]-[0160]; claims 1-23; and figures 1-11b. | 6-10 |
| A | JP 2005-175684 A (NIKON CORP.) 30 June 2005 (2005-06-30)<br>See claims 1-11. | 1-15 |
| A | JP 2012-015889 A (SONY CORP.) 19 January 2012 (2012-01-19)<br>See claims 1-10. | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 February 2024** | **06 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/015670**

| Patent document cited in search report | | | Publication date (day/month/year) | Patent family member(s) | | | Publication date (day/month/year) |
|---|---|---|---|---|---|---|---|
| KR | 10-2386398 | B1 | 14 April 2022 | EP | 3590253 | A1 | 08 January 2020 |
| | | | | EP | 4117274 | A1 | 11 January 2023 |
| | | | | KR | 10-2018-0106076 | A | 01 October 2018 |
| | | | | US | 10972662 | B2 | 06 April 2021 |
| | | | | US | 11570359 | B2 | 31 January 2023 |
| | | | | US | 2018-0270420 | A1 | 20 September 2018 |
| | | | | US | 2021-0227137 | A1 | 22 July 2021 |
| | | | | US | 2023-0171490 | A1 | 01 June 2023 |
| | | | | WO | 2018-169273 | A1 | 20 September 2018 |
| JP | 2022-015696 | A | 21 January 2022 | None | | | |
| KR | 10-2021-0072351 | A | 17 June 2021 | US | 11671710 | B2 | 06 June 2023 |
| | | | | US | 2022-0303473 | A1 | 22 September 2022 |
| | | | | WO | 2021-118187 | A1 | 17 June 2021 |
| JP | 2005-175684 | A | 30 June 2005 | JP | 4325385 | B2 | 02 September 2009 |
| JP | 2012-015889 | A | 19 January 2012 | CN | 102316263 | A | 11 January 2012 |
| | | | | CN | 102316263 | B | 24 August 2016 |
| | | | | EP | 2402884 | A2 | 04 January 2012 |
| | | | | EP | 2402884 | A3 | 29 March 2017 |
| | | | | US | 2012-0002067 | A1 | 05 January 2012 |
| | | | | US | 2014-0029799 | A1 | 30 January 2014 |
| | | | | US | 2015-0085139 | A1 | 26 March 2015 |
| | | | | US | 8643740 | B2 | 04 February 2014 |
| | | | | US | 8947553 | B2 | 03 February 2015 |
| | | | | US | 9311712 | B2 | 12 April 2016 |

Form PCT/ISA/210 (patent family annex) (July 2022)